(19) Europäisches Patentamt
European Patent Office
Office européen des brevets

(11) **EP 2 356 434 B1**

(12) **FASCICULE DE BREVET EUROPEEN**

(45) Date de publication et mention de la délivrance du brevet:
**27.03.2013 Bulletin 2013/13**

(21) Numéro de dépôt: **09802161.1**

(22) Date de dépôt: **10.12.2009**

(51) Int Cl.:
***G01N 25/14*** *(2006.01)*

(86) Numéro de dépôt international:
**PCT/FR2009/052476**

(87) Numéro de publication internationale:
**WO 2010/067028 (17.06.2010 Gazette 2010/24)**

(54) **PROCEDE ET DISPOSITIF DE CONTROLE D'UNE CRISTALLISATION**

VERFAHREN UND VORRICHTUNG ZUR ÜBERWACHUNG VON KRISTALLISIERUNG

METHOD AND DEVICE FOR MONITORING CRYSTALLIZATION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **10.12.2008 FR 0806918**

(43) Date de publication de la demande:
**17.08.2011 Bulletin 2011/33**

(73) Titulaire: **Université Joseph Fourier 38041 Grenoble Cedex 09 (FR)**

(72) Inventeurs:
• **KHALEF, Nawale**
  **F-38240 Meylan (FR)**
• **BAKRI, Aziz**
  **F-38000 Grenoble (FR)**

(74) Mandataire: **Grosset-Fournier, Chantal Catherine et al**
**Grosset-Fournier & Demachy**
**54, rue Saint-Lazare**
**75009 Paris (FR)**

(56) Documents cités:
• AHMED H ET AL: "THE USE OF ISOTHERMAL MICROCALORIMETRY IN THE STUDY OF SMALL DEGREES OF AMORPHOUS CONTENT OF A HYDROPHOBIC POWDER" INTERNATIONAL JOURNAL OF PHARMACEUTICS, ELSEVIER BV, NL, vol. 130, no. 2, 1 janvier 1996 (1996-01-01), pages 195-201, XP000607240 ISSN: 0378-5173
• ANGBERG M ET AL: "Evaluation of heat-conduction microcalorimetry in pharmaceutical stability studies. V. A new approach for continuous measurements in abundant water vapour" INTERNATIONAL JOURNAL OF PHARMACEUTICS, ELSEVIER BV, NL, vol. 81, no. 2-3, 31 mars 1992 (1992-03-31), pages 153-167, XP025554446 ISSN: 0378-5173 [extrait le 1992-03-31]
• SHAH, B; KAKUMANDU, VK; BANSAL, AK: "Analytical techniques for quantification of amorphous/crystalline phases in pharmaceutical solids" JOURNAL OF PHARMACEUTICAL SCIENCES, vol. 95, no. 8, août 2006 (2006-08), pages 1641-1665, XP002539677
• KHALEF, N; BAKRI, A: "Etude comparative de cristallisation par calorimétrie isotherme en système ouvert et en système fermé et détermination de faibles taux d'amorphe" RÉCENTS PROGRÈS EN GÉNIE DES PROCÉDÉS, no. 97, 22 mai 2008 (2008-05-22), pages 249-256, XP002548079 ISBN: 2-910239-71-3

EP 2 356 434 B1

Printed by Jouve, 75001 PARIS (FR)

**Description**

**Domaine technique**

La présente invention concerne un procédé de contrôle d'une cristallisation ou d'une recristallisation d'une matière solide. Elle concerne aussi un dispositif mettant en oeuvre ce procédé.

Le domaine technique de l'invention est plus particulièrement mais de manière non limitative l'étude, au sein d'un calorimètre, de la cristallisation ou de la recristallisation d'un échantillon de matière solide, notamment pour déterminer un taux d'amorphe de cet échantillon, ou pour déterminer un taux d'une phase cristalline qui recristallise, ou encore pour optimiser les conditions expérimentales de cristallisation de cet échantillon. Le domaine technique peut également s'étendre à tout système où un contrôle de la vitesse (et/ou de sa variation) d'introduction de molécules à l'état vapeur induit au niveau de l'échantillon une réaction physique ou chimique ou biologique mesurable par le suivi du flux de chaleur qu'elle génère.

**Etat de la technique antérieure**

Ces dernières années les industries pharmaceutiques et agroalimentaires ont montré un intérêt particulier envers les corps amorphes. On entend par corps amorphe un corps de préférence solide et qui n'est pas cristallisé. Les amorphes sont recherchés pour leurs propriétés physico-chimiques et mécaniques intéressantes, telles que :

- leur solubilité, car ils présentent une meilleure solubilité que leurs homologues cristallins, ou
- leur propriété viscoélastique, utilisée notamment dans les procédés de compression, ou

Souvent, leur présence n'est pas désirable du fait de leur grande mobilité moléculaire, qui leur confère une plus grande instabilité physique et chimique que leur homologue cristallin. Ceci peut avoir des conséquences dramatiques sur la qualité du produit fini, notamment si ce produit est sous forme de poudre. L'amorphe peut être généré lors d'opérations unitaires telles que le broyage, la lyophilisation ou la nébulisation. L'amorphe ainsi généré peut subir sous l'effet d'une humidité ou d'une température une cristallisation et causer la prise en masse lors de la fabrication ou le stockage du produit. Par exemple, dans le cas des produits destinés à la voie pulmonaire, la présence de faibles quantités d'amorphe peut causer l'agglomération des particules entre elles lors de l'inhalation, ce qui empêche le principe actif (PA) d'atteindre les alvéoles pulmonaires et diminue de ce fait son effet thérapeutique.

La recherche et la mise au point de méthodes fiables de détermination du taux d'amorphe dans les matières premières ou dans les produits finis ont toujours été un souci constant des industriels dans ce domaine. La propension de l'amorphe à cristalliser sous l'effet de la température ou de la pression est mise à profit pour mesurer le taux d'amorphe d'un produit. L'analyse thermique est l'une des méthodes de prédilection pour mesurer le taux d'amorphe.

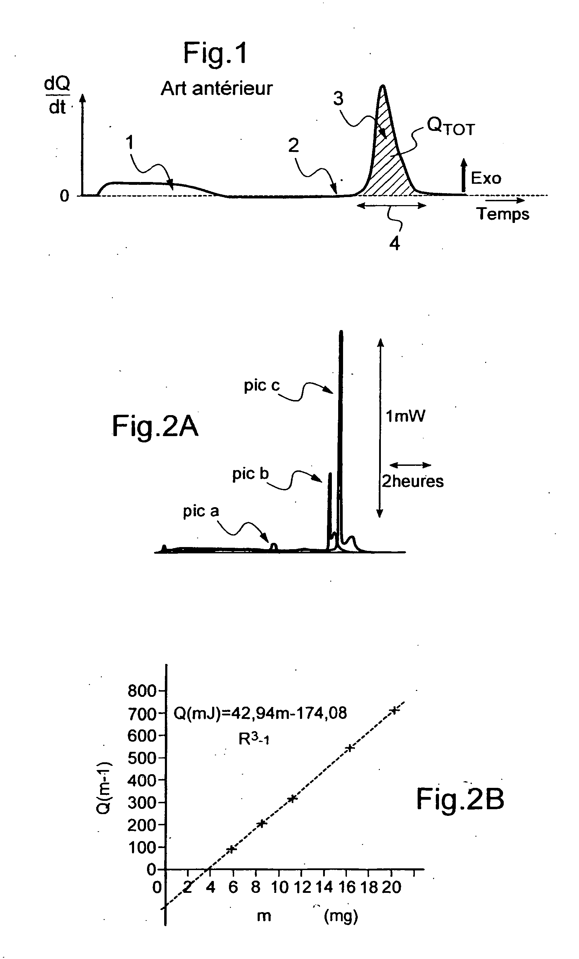

On connaît un procédé pour cristalliser un amorphe sec à température constante en ampoule fermée et sous humidité relative (HR) contrôlée par un saturateur contenant une solution saline saturée. Les traces (TT) de l'activité thermique du phénomène sont suivies dans un microcalorimètre isotherme (ITC). Cette méthode est largement adoptée par les industriels et particulièrement dans le secteur pharmaceutique, pour déterminer de faibles taux d'amorphe présent dans les matières premières ou dans un produit fini. Dans un tel procédé, un échantillon partiellement amorphe est placé dans une ampoule calorimétrique fermée, dans laquelle on ajoute un saturateur ouvert qui contrôle l'humidité désirée au sein de l'ampoule de mesure. L'ensemble est introduit dans un microcalorimètre, l'ampoule reste en position d'équilibre pendant environ 30 min puis elle est abaissée en position de mesure. Le saturateur contient une solution d'eau saturée d'un sel à activité d'eau définie et constante, imposant ainsi une Humidité Relative (HR) fixe dans la phase vapeur de l'ampoule, au-dessus de l'échantillon. En référence à la figure 1, dès l'introduction du saturateur dans l'ampoule de mesure, l'échantillon sec et partiellement amorphe subit les transformations suivantes :

- phase référencée 1 : Hydratation par la phase vapeur : l'échantillon sec adsorbe l'humidité de la phase vapeur de l'ampoule. Ce phénomène est exothermique. Les molécules d'eau s'évaporent du saturateur pour maintenir la pression de vapeur constante, et ce phénomène est endothermique. L'activité thermique du phénomène lors de cette phase de sorption de l'eau sur l'amorphe et évaporation du saturateur tend vers zéro, au fur et à mesure que l'équilibre s'établit.

- phase référencée 2 : lorsque l'échantillon amorphe atteint son Humidité Relative Critique, il se dissout: ce phénomène est endothermique mais il est accompagné d'hydratation des molécules dissoutes (phénomène exothermique). La chaleur globale peut aussi bien apparaître endothermique qu'exothermique, selon les propriétés de l'échantillon analysé.

- phase référencée 3 : après s'être dissout, l'échantillon recristallise et expulse l'eau absorbée jusqu'à son Humidité Relative Critique. L'eau expulsée lors de la cristallisation de l'amorphe s'évapore, causant une augmentation de l'Humidité Relative de la phase vapeur de l'ampoule au-delà de la valeur fixée par le saturateur. Il s'ensuit une condensation de l'eau dans le saturateur à partir de la phase vapeur jusqu'à ce que l'équilibre soit atteint. À l'équilibre, l'Humidité Relative dans l'ampoule est fixée par le saturateur. La masse d'eau expulsée et condensée dans le saturateur correspond donc à la différence entre la teneur en eau de l'amorphe et celle du cristallin à l'humidité de cristallisation. Elle est variable d'une mesure à l'autre car elle dépend de la masse de l'amorphe dans l'échantillon.

La méthode connue exposée ci-dessus est décrite dans un article de SHAH Birju et Al paru en Août 2006 et intitulé « Analytical techniques for quantification of amorphous/crystalline phase in pharmaceutical solids » dans le « International Journal of Pharmaceutics », vol 95 N° 8 pages 1641-1665. Cet article fait le point sur les différentes techniques de quantification des phases amorphe/cristalline dans des échantillons. Cet article comporte notamment une description de la méthode de microcalorimétrie isothermique et rappelle les principes à la base de cette méthode dont un perfectionnement est l'objet de la présente invention. Il comporte une liste importante de références et notamment une référence 82 à un article de M. Angberg et al paru en mars 1992, et une référence 86 à un article de Ahmed et al paru en 1996. Ces deux références sont commentées ci- après.

L'article de M. Angberg et al paru en mars 1992 et intitulé « Evaluation of heat conduction microcalorimetry in pharmaceuticals stability studies. V. A new approach for continuous measurements in abundant water vapour » dans le « International Journal of Pharmaceutics », Elsevier BV, NL vol 81 N° 2-3 pages 153-167 a pour objet d'évaluer une technique de mesure microcalorimétrique rendant possible le contrôle continu d'un processus d'incorporation d'eau d'hydratation en présence d'une humidité relative importante. Les expériences ont porté principalement sur l'hydratation de poudres anhydres de lactose. Il est rapporté notamment que la variation d'enthalpie pour la liaison d'eau d'hydratation de β-lactose a pu être calculée.

L'article de Huméra Ahmed et al paru en janvier 1996 et intitulé « The use of isothermal microcalorimetry in the study of small degrees of amorphous content of a hydrophobic powder » dans le International Journal of pharmaceutics, Elsevier BV, NL vol 130 N° 2 pages 195-201 décrit des expériences d'usage de vapeurs non aqueuse pour recristalliser des contenus amorphes de poudre ayant une solubilité aqueuse faible. Le but des expériences est aussi de déterminer si la microcalorimétrie isothermique peut avoir un usage plus général pour caractériser des poudres de façon précise. (page 196, première colonne, fin du premier paragraphe entier). L'article conclut que pourvu qu'il existe une phase vapeur capable d'assurer la transition entre phases amorphe et cristalline, la microcalorimétrie isothermique peut être utilisée pour caractériser la cristallinité de matériaux qu'ils soient hydrophiles ou hydrophobes. (page 201, conclusion). De plus la sensibilité de la méthode microcalorimétrique pour la détection de matériau amorphe est plus grande que les méthodes XRPD (X- ray powder diffraction) ou DSC (differential scanning calorimetry) en particulier pour les poudres à faible contenu amorphe.

Enfin un article plus récent ayant pour auteurs les inventeurs de la présente invention Khalef Nawel et Bakri Aziz intitulé « Etude comparative de cristallisation par calorimétrie isotherme en système ouvert et en système fermé et détermination de faibles taux d'amorphe » est paru en mai 2008 dans « Récents Progrès en Génie des Procédés » Numéro 97, ISBN :2-910239-71-3. Cet article attire l'attention sur les limites de la détermination du taux d'amorphe par calorimétrie isotherme. Il rappelle que les valeurs des enthalpies de cristallisation trouvées dans la littérature varient selon les auteurs. L'étude rapportée dans l'article montre que la chaleur d'hydratation des solutions salines saturées destinées à obtenir une Humidité Relative constante au cours de la mesure est très significative et à l'origine de l'incertitude de la méthode. Les auteurs proposent deux méthodes alternatives, l'une en système fermé utilisant des solvants purs, l'autre en système ouvert mesurant la chaleur de transformation.

Le procédé selon l'état de la technique comprend :

- une mesure de l'activité thermique dQ/dt de l'ampoule au sein du microcalorimètre, ladite mesure donnant une courbe telle que celle représentée sur la figure 1, et

- une déduction de la quantité de chaleur $Q_{tot}$ reçue ou cédée par le système compris dans l'ampoule pendant la phase 3, par intégration de l'activité thermique sur l'intervalle de temps 4 correspondant au pic d'activité thermique de la phase 3,

- une détermination de la masse m de matière amorphe de l'échantillon.

Les chaleurs d'évaporation et de condensation de l'eau expulsée étant égales en valeur absolue, la chaleur $Q_{tot}$ mesurée lors de cette phase 3 est attribuée par l'état de l'art à la chaleur cristallisation de l'amorphe $Q_{cri}$s et donc considérée proportionnelle à la masse d'amorphe cristallisée selon l'équation :

$$Q_{tot} = Q_{cris} = \Delta H_{cris} \, {}^*m$$

Où $\Delta H_{cris}$ est l'enthalpie de cristallisation de l'amorphe. On détermine donc la masse m selon l'équation :

$$m = Q_{cris} / \Delta H_{cris} = Q_{tot} / \Delta H_{cris}$$

Les inventeurs ont démontré qu'un tel procédé de détermination de la masse m manque de précision, et proposent un nouveau procédé et dispositif permettant de résoudre ce problème de précision de la détermination de la masse m de matière amorphe de l'échantillon.

**Exposé de l'invention**

Cet objectif est atteint avec une utilisation d'une source de vapeur dans un système isotherme pour contrôler la cristallisation ou la recristallisation d'un échantillon de matière solide, initialement au moins en partie amorphe et/ou au moins en partie cristalline, contenu dans le système à pression de vapeur contrôlée par la source de vapeur, ladite source de vapeur comprenant au moins un solvant de cristallisation de ladite matière solide, dont la diffusion de vapeur entraine la cristallisation ou la recristallisation de l'échantillon, ladite source de vapeur étant telle que les quantités de chaleurs échangées au sein du système pendant la cristallisation ou la recristallisation de l'échantillon autres que la chaleur de cristallisation ou de recristallisation de l'échantillon sont inférieures à environ 10%, notamment 5%, avantageusement 1% de la chaleur de cristallisation ou de recristallisation de l'échantillon.
L'échantillon est de préférence compris dans une cellule telle que par exemple une ampoule de microcalorimètre isotherme ou une cupule DSC, et dont le volume intérieur est ajusté au volume de l'échantillon de sorte que le volume mort de la cellule soit inférieur à 5% du volume de l'échantillon.
Selon l'invention, on peut de manière avantageuse injecter la vapeur directement à l'intérieur de l'échantillon qui est alors de préférence sous forme de poudre.
Selon un mode de réalisation avantageux, le système isotherme est fermé. Par système fermé, on désigne par exemple tout enceinte ou ensembles d'enceintes fermées hermétiquement et permettant un échange de chaleur : cellule calorimétrique, cupule de mesure DSC...
Par pression de vapeur contrôlée par la source de vapeur, on désigne le fait d'imposer ou d'atteindre la pression de vapeur critique pour la cristallisation de l'amorphe par la source de vapeur appropriée, telle que définie ci-après.
La source de vapeur peut comprendre un soluté dissout dans au moins un solvant de cristallisation :

- ledit soluté étant en quantité inférieure à la quantité nécessaire à la saturation du soluté dans ledit solvant, ou
- ledit soluté étant à saturation dans ledit solvant, le soluté dissout dans ledit solvant ayant un temps de latence de cristallisation supérieur à un temps de latence de cristallisation ou de recristallisation de l'échantillon de sorte que le soluté ne cristallise qu'après la fin de la cristallisation ou de la recristallisation de l'échantillon.

Selon un mode de réalisation, ledit soluté ne présente pas de chaleur de solvatation dans ledit solvant.
Selon un autre mode de réalisation, ledit soluté est en quantité inférieure à la quantité nécessaire à la saturation du soluté dans ledit solvant et ledit soluté ne présente pas de chaleur de solvatation dans ledit solvant.
Selon un autre mode de réalisation, ledit soluté étant à saturation dans ledit solvant, le soluté dissout dans ledit solvant ayant un temps de latence de cristallisation supérieur à un temps de latence de cristallisation ou de recristallisation de l'échantillon de sorte que le soluté ne cristallise qu'après la fin de la cristallisation ou de la recristallisation de l'échantillon et ledit ne présente pas de chaleur de solvatation dans ledit solvant.
Selon un autre mode de réalisation de l'invention, ledit solvant dans la source de vapeur ne comprend aucun soluté dissout, et notamment la source de vapeur ne comprend aucun soluté dissout.
Selon un autre mode de réalisation de l'invention, ledit solvant dans la source de vapeur ne comprend de préférence aucun sel dissout, et notamment la source de vapeur ne comprend aucun sel dissout.
Dans une variante, la source de vapeur peut être un unique solvant pur, de préférence sélectionné parmi de l'eau pure ou un solvant organique tel que du méthanol ou de l'éthanol.
Par solvant pur, on peut désigner tout solvant aqueux ou organique permettant la cristallisation de l'amorphe tels que le méthanol, l'éthanol, l'acétone, l'acétonitrile, le n-propanol, l'alcool n-butylique, le THF, le chloroforme, le toluène...Cette liste n'est pas exhaustive.
Dans une autre variante, la source de vapeur peut comprendre un mélange de solvants de préférence sélectionnés parmi de l'eau ou un solvant organique tels que le méthanol, l'éthanol, l'acétone, l'acétonitrile, le n-propanol, l'alcool n-butylique, le THF, le chloroforme, le toluène... Cette liste n'est pas exhaustive.

En particulier le mélange «méthanol-éthanol » ou « eau-éthanol » ou encore « eau-méthanol » ou « glycérol-méthanol».

De manière générale le pourcentage du mélange avantageux dépend de la nature de l'amorphe à cristalliser et des solvants utilisés. Dans le cas de mélanges «méthanol-éthanol » ou « eau-éthanol » ou encore « eau-méthanol », la cristallisation du lactose peut avoir lieu dans toutes les proportions du mélange. Pour le mélange« glycérol-méthanol », la cristallisation du saccharose n'a été observée que pour des mélanges dont le pourcentage de méthanol est supérieur à 65% en poids.

L'échantillon de matière peut comprendre initialement (c'est à dire avant la cristallisation ou la recristallisation de l'échantillon) :

- un échantillon purement amorphe,
- un cristal initialement polymorphe ou pseudo-polymorphe, la recristallisation comprenant un passage d'une phase cristalline à une autre phase cristalline d'une partie ou de la totalité de l'échantillon, ou
- un mélange amorphe et cristallin,

Selon un mode de réalisation de l'invention, l'utilisation comprend de préférence en outre une détermination du taux d'amorphe de l'échantillon.

Le système (de préférence fermé) comprend des moyens de limitation et/ou de contrôle et/ou de maîtrise de la diffusion de vapeur, c'est-à-dire de la vitesse de diffusion de vapeur. Par la maîtrise de la vitesse de diffusion de la pression de vapeur à partir de la source de vapeur, on évite de nombreux désavantage de l'état de la technique antérieur. La limitation de la diffusion de vapeur est obtenue par tout moyen physicochimique (ex diffusion à travers une membrane) ou mécanique (diamètre, longueur du capillaire de diffusion) mis en oeuvre, afin de limiter la vitesse de sorption de ladite vapeur sur l'échantillon. Les moyens de limitation sont de préférence agencés pour que la vitesse de diffusion de vapeur soit inférieure à 100 nano mole par seconde

La limitation de la vitesse de diffusion peut être agencée pour que la cristallisation ou la recristallisation démarre uniquement lorsque le système a atteint une température d'équilibre et que la mesure de la chaleur de cristallisation ne soit pas perturbée.

La source de vapeur peut être contenue dans un capillaire, et/ou

La source de vapeur peut être absorbée dans un support non soluble dans ledit solvant de cristallisation, et/ou

La source de vapeur peut être contenue dans un réservoir séparé de l'échantillon par une paroi poreuse limitant la diffusion de vapeur du réservoir vers l'échantillon de matière.

Suivant encore un autre aspect de l'invention, il est proposé un procédé de contrôle d'une cristallisation ou d'une recristallisation comprenant :

- une diffusion de vapeur d'au moins un solvant de cristallisation dans un système isotherme, ledit système comprenant un échantillon de matière solide et une source de vapeur diffusant la vapeur, la matière solide étant initialement au moins en partie amorphe et/ou au moins en partie cristalline,
- une cristallisation ou une recristallisation de l'échantillon sous l'effet de la vapeur diffusée,
- au moins pendant la cristallisation ou la recristallisation, une mesure de chaleur reçue ou cédée par le système,

la source de vapeur comprenant ledit solvant de cristallisation de ladite matière solide, procédé selon l'invention dans lequel pendant la cristallisation ou la recristallisation les quantités de chaleurs échangées au sein du système autres que la chaleur de cristallisation ou de recristallisation de l'échantillon sont inférieures à environ 10%, notamment 5%, avantageusement 1% de la chaleur de cristallisation ou de recristallisation de l'échantillon.

L'échantillon est de préférence compris dans une cellule telle que par exemple une ampoule de microcalorimètre ou une cupule DSC, et dont le volume intérieur est ajusté au volume de l'échantillon de sorte que le volume mort de la cellule soit inférieur à 5% du volume de l'échantillon.

On peut de manière avantageuse injecter la vapeur directement à l'intérieur de l'échantillon qui est sous forme de poudre.

La source de vapeur peut comprendre un soluté dissout dans ledit solvant de cristallisation :

- ledit soluté étant en quantité inférieure à la quantité nécessaire à la saturation du soluté dans ledit solvant, ou
- ledit soluté étant à saturation dans ledit solvant, le soluté dissout dans ledit solvant ayant un temps de latence de cristallisation supérieur à un temps de latence de cristallisation ou de recristallisation de l'échantillon de sorte que le soluté ne cristallise qu'après la fin de la cristallisation ou de la recristallisation de l'échantillon, ou
- la source de vapeur comprenant un soluté dissout dans ledit solvant de cristallisation, ledit soluté ne présentant pas de chaleur de solvatation dans ledit solvant.

Le soluté a pour rôle d'abaisser la pression de vapeur et d'être proche de la pression critique de cristallisation de l'amorphe, tandis que la limitation de la vitesse de diffusion de la vapeur permet d'éviter que la sorption se fasse trop vite et que les phases de sorption et de cristallisation ne soient confondue ce qui empêche une bonne intégration. La limitation de la diffusion est indispensable que l'on utilise un solvant pur ou une solution avec un soluté.

Le soluté peut être un solide soluble dans le solvant ou un liquide miscible dans le solvant.

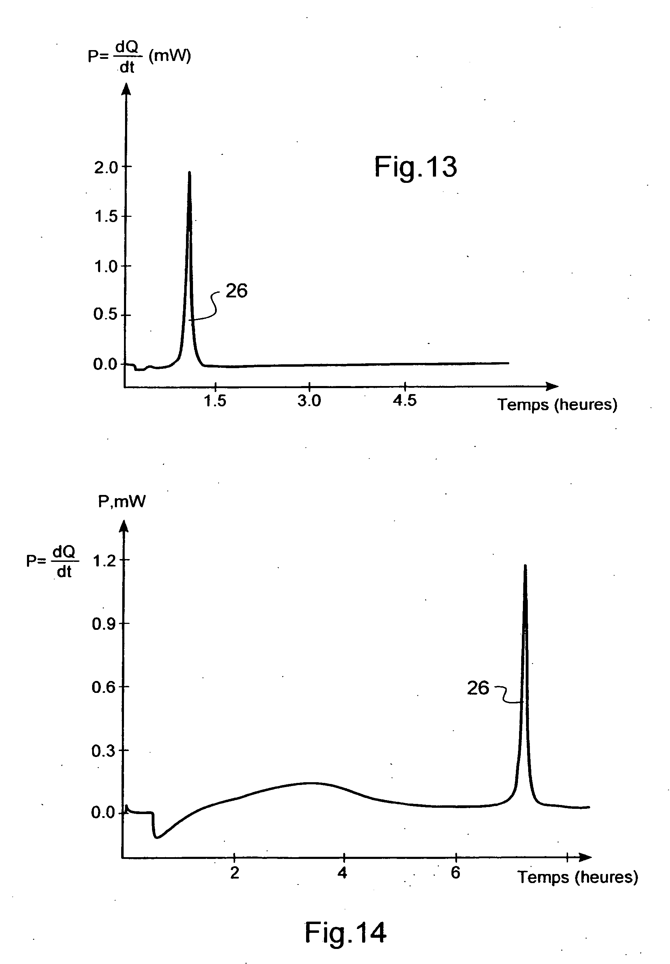

Le soluté peut être de nature identique à celle de l'échantillon de matière solide à cristalliser ou à recristalliser comme le montre la figure 13 où un échantillon de saccharose est cristallisé avec une solution méthanolique saturée en saccharose, ou encore, un échantillon de lactose, cristallisé avec une solution méthanolique saturée en lactose présenté dans la figure 14. L'utilisation d'une solution saturée en soluté de nature identique à celle de l'échantillon a l'avantage de maintenir le cristal formé sous une pression de vapeur suffisamment importante pour cristalliser l'amorphe (la pression de vapeur critique de dissolution/cristallisation de l'amorphe étant inférieure à la partie de l'échantillon déjà cristallisé) et de ne pas risquer d'exposer le cristal formé à une pression de vapeur supérieure à sa pression critique de dissolution et donc risquer de dissoudre le cristal lors de phase de cristallisation.

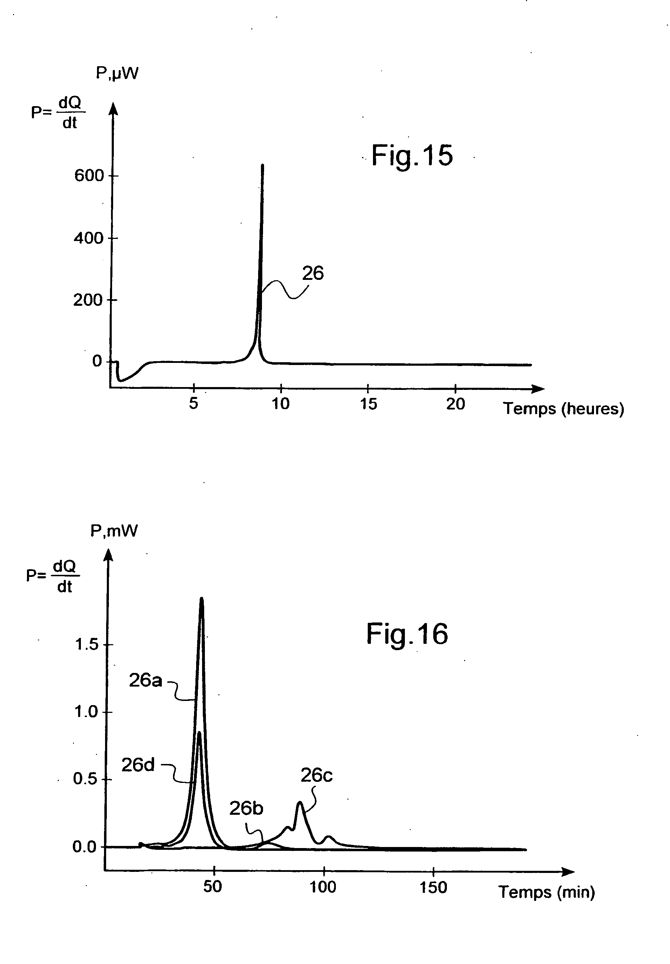

Si la pression de vapeur critique de dissolution « du cristal formé » (la forme cristalline de l'échantillon à cristalliser) est connue, tout autre soluté peut également être utilisé à une concentration telle que la pression de vapeur imposée par la solution dudit soluté dans le saturateur n'excède pas la pression de vapeur critique de dissolution de la partie de l'échantillon déjà cristallisé comme le montre la figure 15, où un échantillon de saccharose est cristallisé avec une solution méthanolique saturée en lactose, le lactose étant un soluté de nature différente de l'échantillon à cristalliser.

Selon un mode de réalisation du procédé de l'invention, ledit solvant dans la source de vapeur ne comprend aucun soluté dissout.

Selon un autre mode de réalisation du procédé de l'invention, ledit solvant dans la source de vapeur ne comprend de préférence aucun sel dissout.

Dans une variante, la source de vapeur peut être un unique solvant pur, de préférence sélectionné parmi de l'eau pure ou un solvant organique tel que du méthanol ou de l'éthanol.

Dans une autre variante, la source de vapeur est un mélange de solvants de préférence sélectionnés parmi de l'eau pure ou un solvant organique tel que du méthanol ou de l'éthanol, en particulier le mélange «méthanol-éthanol » ou « eau-éthanol » ou encore « eau-méthanol ».

L'échantillon de matière peut comprendre initialement (c'est à dire avant la cristallisation ou la recristallisation de l'échantillon) :

- un échantillon purement amorphe.
- un cristal initialement polymorphe ou pseudo-polymorphe, la recristallisation comprenant un passage d'une phase cristalline à une autre phase cristalline d'une partie ou de la totalité de l'échantillon, ou
- un mélange amorphe et cristallin,

Le procédé selon l'invention comprenant de préférence en outre une détermination du taux d'amorphe de l'échantillon.

La mesure de chaleur peut comprendre une mesure de flux de chaleur échangé avec le système ou une mesure de l'activité thermique du système.

Le procédé selon l'invention comprend en outre une limitation d'une vitesse de la diffusion de vapeur dans le système :

- on peut limiter la vitesse de diffusion de vapeur de sorte que la vitesse de diffusion de vapeur soit inférieure à 100 nano mole par seconde, et/ou
- la diffusion de vapeur peut comprendre une diffusion de vapeur dudit au moins un solvant de cristallisation contenu dans un capillaire, et/ou
- la diffusion de vapeur peut comprendre une diffusion de vapeur dudit solvant de cristallisation absorbé dans un support non soluble dans cet au moins un solvant, et/ou
- la diffusion de vapeur peut comprendre une diffusion de vapeur dudit solvant de cristallisation contenu dans un réservoir séparé de l'échantillon par une paroi poreuse limitant la diffusion de vapeur du réservoir vers l'échantillon de matière.

Le procédé selon l'invention peut comprendre avant la mesure une stabilisation de la température du système jusqu'à ce que le système atteigne une température d'équilibre, le système restant à cette température d'équilibre pendant la mesure, la limitation de la vitesse de diffusion étant de préférence agencée pour que la cristallisation ou la recristallisation démarre uniquement lorsque le système a atteint la température d'équilibre.

Suivant encore un autre aspect de l'invention, il est proposé un dispositif de contrôle d'une cristallisation ou d'une recristallisation, comprenant :

- des moyens pour recevoir un échantillon de matière solide initialement au moins en partie amorphe et/ou au moins en partie cristalline et pour recevoir une source de vapeur comprenant au moins un solvant de cristallisation de ladite matière solide, les moyens de réception étant agencés pour que l'échantillon de matière et la source de vapeur forment un système isotherme, les moyens de réception étant en outre agencé pour que de la vapeur diffusée par la source déclenche une cristallisation ou une recristallisation de l'échantillon, et
- des moyens pour mesurer une chaleur reçue ou cédée par le système,

le dispositif selon l'invention comprenant en outre des moyens pour limiter une vitesse de la diffusion de vapeur dans le système.

Les moyens de limitation peuvent être agencés pour que la vitesse de diffusion de vapeur soit inférieure à 100 nano mole par seconde.

Le dispositif selon l'invention, et plus particulièrement les moyens de réception, peuvent comprendre une cellule telle que par exemple une ampoule de microcalorimètre ou une cupule DSC, cette cellule étant agencée pour recevoir l'échantillon et pour que son volume intérieur soit ajustable au volume de l'échantillon de sorte que le volume mort de la cellule soit inférieur à 5% du volume de l'échantillon.

Le dispositif selon l'invention peut comprendre en outre des moyens pour injecter la vapeur directement à l'intérieur de l'échantillon qui est sous forme de poudre.

Les moyens de limitation de la vitesse de diffusion peuvent comprendre :

- un capillaire prévu pour contenir la source de vapeur, et/ou

- un support non soluble dans ledit solvant et prévu pour absorber la source de vapeur, et/ou

- une paroi poreuse séparant l'échantillon et un réservoir prévu pour contenir la source de vapeur, ladite paroi étant agencée pour limiter la diffusion de vapeur du réservoir vers l'échantillon de matière.

Les moyens de réception peuvent comprendre des moyens pour stabiliser une température du système jusqu'à ce que le système atteigne une température d'équilibre, les moyens de limitation de la vitesse de diffusion étant de préférence agencés pour que la cristallisation ou la recristallisation de l'échantillon démarre uniquement lorsque le système a atteint la température d'équilibre.

Le dispositif selon l'invention peut comprendre en outre des moyens pour déterminer un taux d'amorphe de l'échantillon, à partir d'une mesure effectuée par les moyens de mesure.

**Description des figures et modes de réalisation**

D'autres avantages et particularités de l'invention apparaîtront à la lecture de la description détaillée de mises en oeuvre et de modes de réalisation nullement limitatifs, et des dessins annexés suivants :

- la figure 1 illustre une courbe d'activité thermique selon l'état de la technique antérieure ;
- les figures 2A et 2B sont obtenues pour différentes masses d'amorphe.
- la figure 2A représente des courbes d'activité thermique de trois échantillons purement amorphes (échantillon 1, 3, 5), ces courbes étant obtenues selon le procédé de l'état de la technique antérieure. Les échantillons sont du lactose amorphe. Les masses des échantillons sont respectivement 5,9mg (échantillon 1), 11,2mg (échantillon 3) et 20,4mg (échantillon 5). Les chaleurs de cristallisation $Q_{cris}$ de chacun des échantillons sous les pics "a", "b" et "c" sont respectivement de 78,8mJ (échantillon 1), de 306,3mJ (échantillon 3) et de 701,0mJ (échantillon 5) ;
- la figure 2B représente une droite d'étalonnage d'une chaleur de cristallisation $Q_{cris}$ de l'échantillon de lactose purement amorphe en fonction de la masse m de l'échantillon de lactose, la chaleur $Q_{cris}$ étant calculée selon le procédé de l'état de la technique antérieure ;

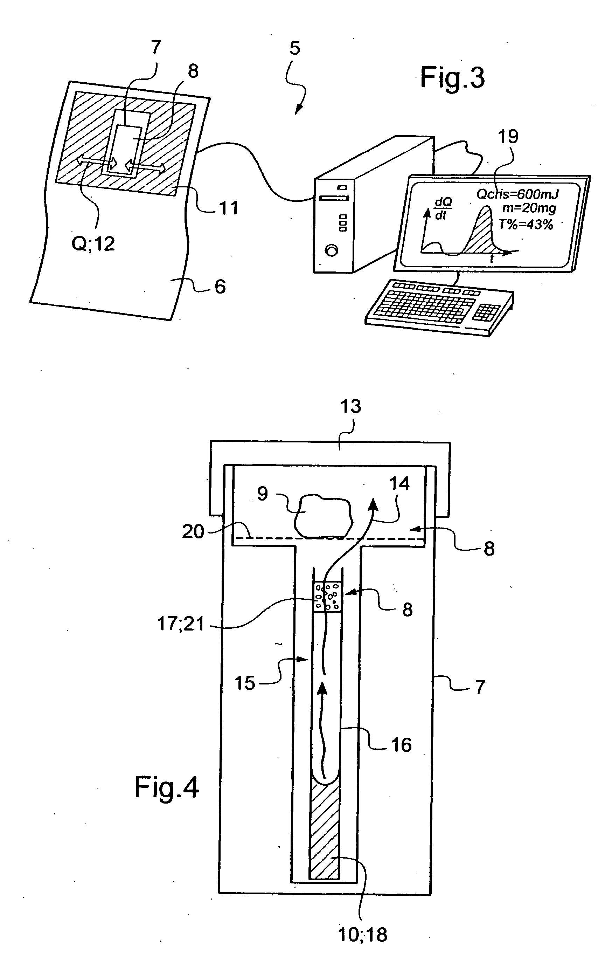

- la figure 3 représente schématiquement un mode de réalisation préférentiel de dispositif selon l'invention ;
- la figure 4 illustre un premier mode de réalisation d'ampoule calorimétrique en système fermé et en verre pour le dispositif de la figure 3 ;

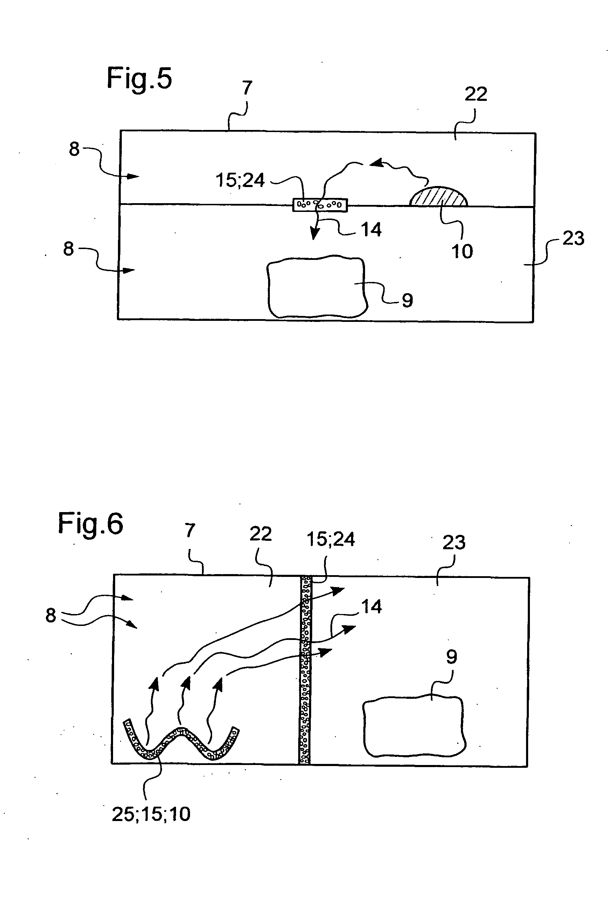

- la figure 5 illustre un deuxième mode de réalisation d'ampoule calorimétrique en système fermé et en verre pour le dispositif de la figure 3 ;
- la figure 6 illustre un troisième mode de réalisation d'ampoule calorimétrique fermée en verre pour le dispositif de la figure 3 ;

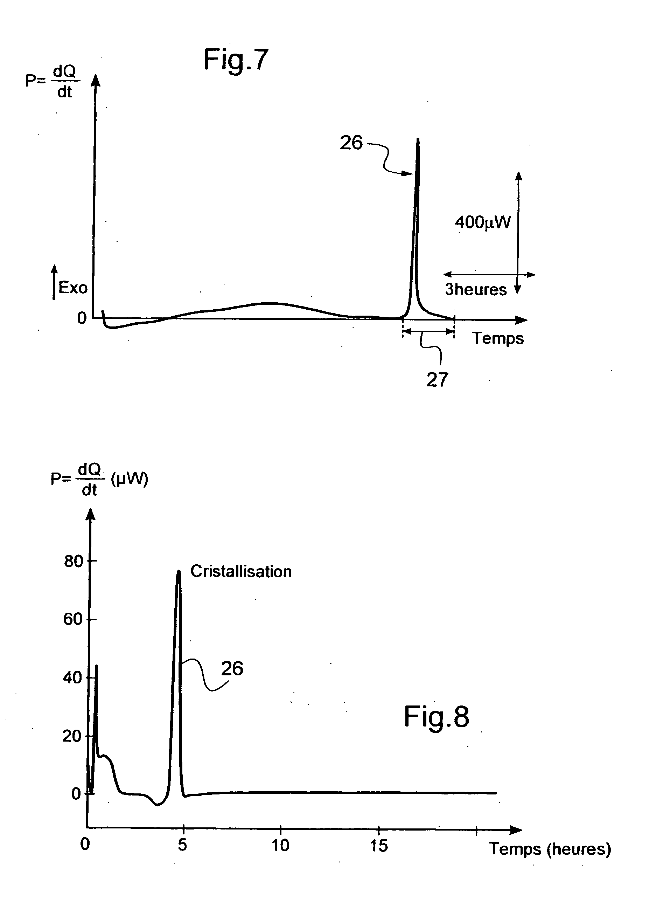

- les figures 7 à 11 sont des courbes d'activité thermique de différents échantillons partiellement amorphes, ces courbes étant obtenues par un premier mode de réalisation de procédé selon l'invention ;

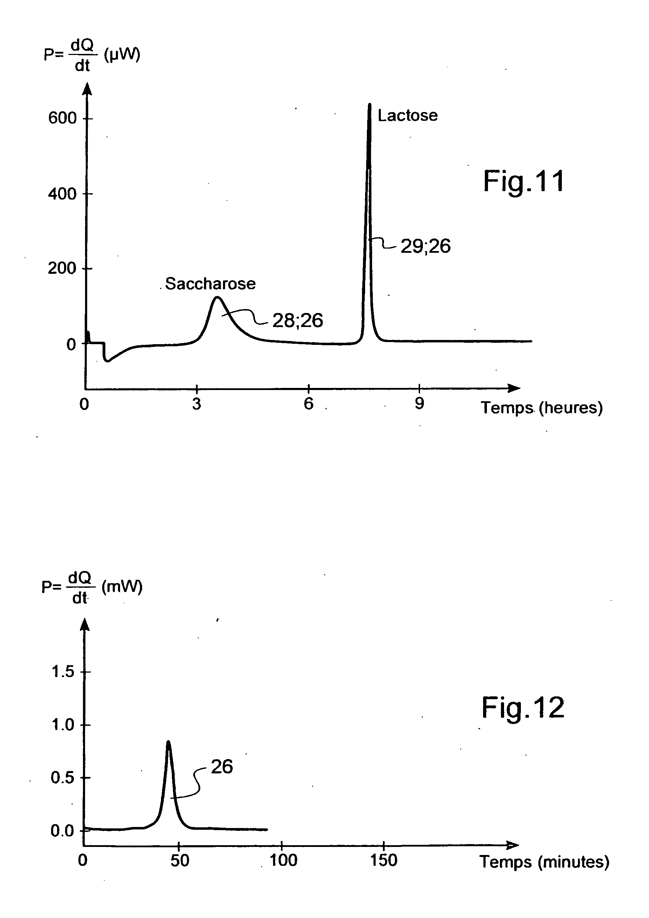

- les figures 12 et 13 sont des courbes d'activité thermique de différents échantillons partiellement amorphes, ces courbes étant obtenues par un deuxième mode de réalisation de procédé selon l'invention ;

- les figures 14 et 15 sont des courbes d'activité thermique de différents échantillons partiellement amorphes, ces courbes étant obtenues par un deuxième mode de réalisation du procédé selon l'invention ;
- la figure 16 illustre des courbes d'activité thermique de différents échantillons partiellement amorphes sous pression de vapeur du méthanol pur ou en mélange avec différentes proportions de glycérol. Le pic 26a représente la chaleur de cristallisation de 20,79mg de saccharose sous la pression de vapeur de 100$\mu$l de méthanol pur. Le pic 26b représente la chaleur de cristallisation de 11,51mg de saccharose sous la pression de vapeur d'une solution de 100 $\mu$l de méthanol dans laquelle est dissout du glycérol dans une proportion de 1g de méthanol pour 0,33g de glycérol. Le pic 26c représente la chaleur de cristallisation de 11,37mg du saccharose sous la pression de vapeur d'une solution de 100$\mu$l de méthanol dans laquelle est dissout du glycérol dans une proportion de 1g de méthanol pour 0,67g de glycérol. Le pic 26d représente la chaleur de cristallisation de 11,52mg de saccharose sous la pression de vapeur d'une solution de 100$\mu$l de méthanol dans laquelle est dissout du glycérol dans une proportion de 0,7g de méthanol pour 0,9g de glycérol ;

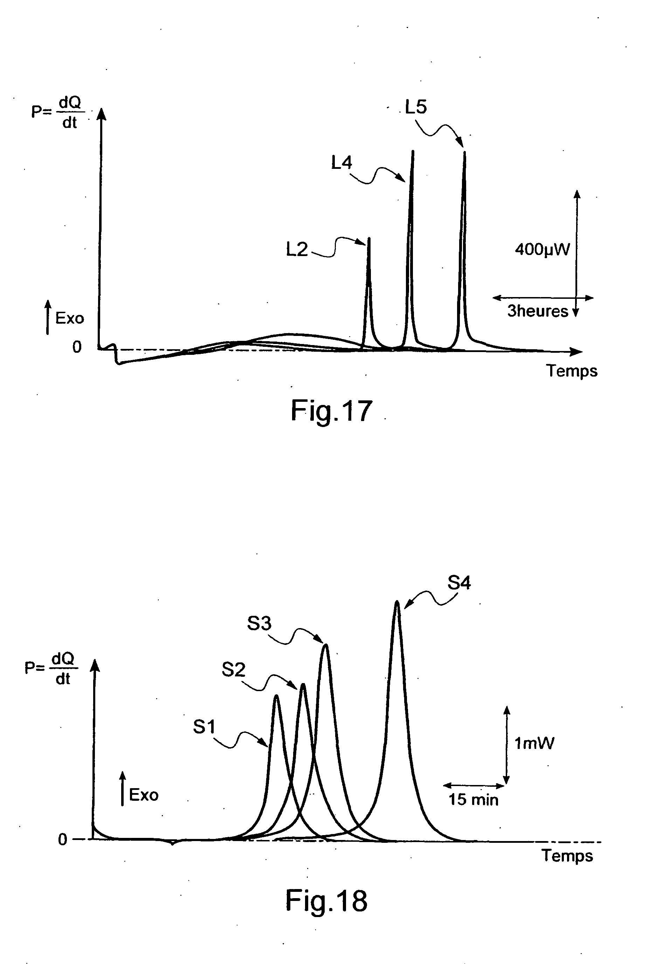

- les figures 17 et 18 illustrent différentes courbes d'activités thermiques de différents échantillons purement amorphes, et

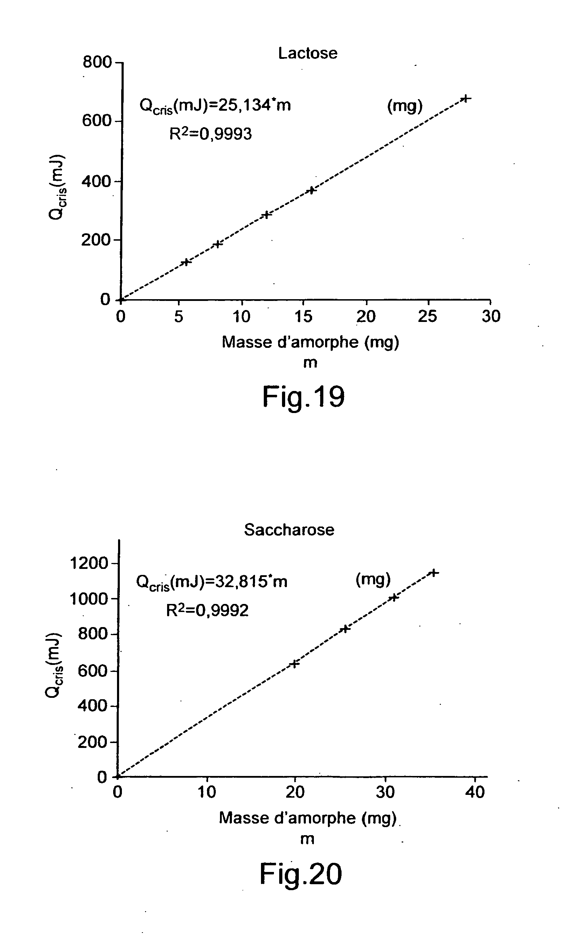

- les figures 19 et 20 représentent des droites d'étalonnage d'une chaleur de cristallisation $Q_{cris}$ des échantillons des figures 17 et 18 en fonction de la masse m de ces échantillons, la chaleur $Q_{cris}$ étant calculée par un procédé selon l'invention ;

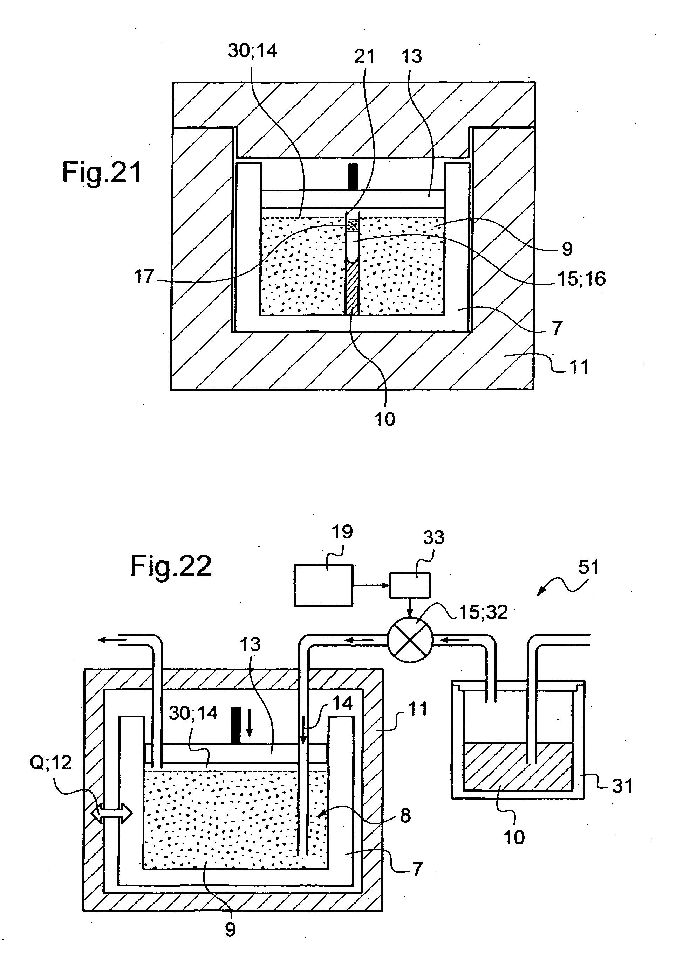

- la figure 21 illustre un quatrième mode de réalisation d'ampoule calorimétrique en système fermé et en verre pour le dispositif de la figure 3 ;
- la figure 22 illustre une première variante de dispositif selon l'invention en système ouvert pour un système en calorimétrie isotherme;

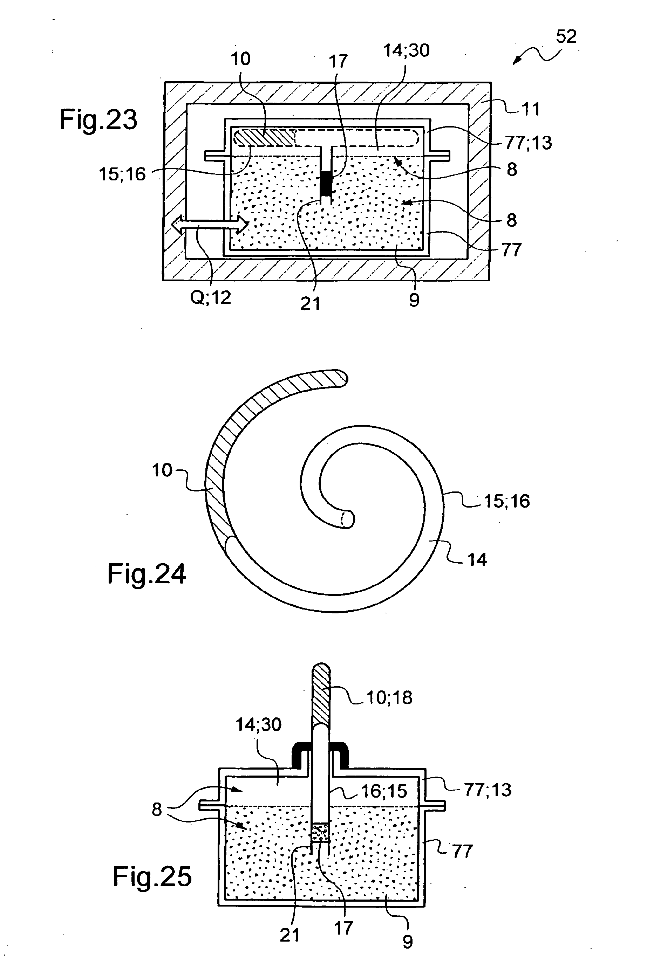

- la figure 23 illustre un premier mode de réalisation de cupule DSC fermée pour une deuxième variante de dispositif selon l'invention ;
- la figure 24 illustre un capillaire en spirale pour la cupule de la figure 23 ;
- la figure 25 illustre un deuxième mode de réalisation de cupule DSC fermée pour la deuxième variante de dispositif selon l'invention ;

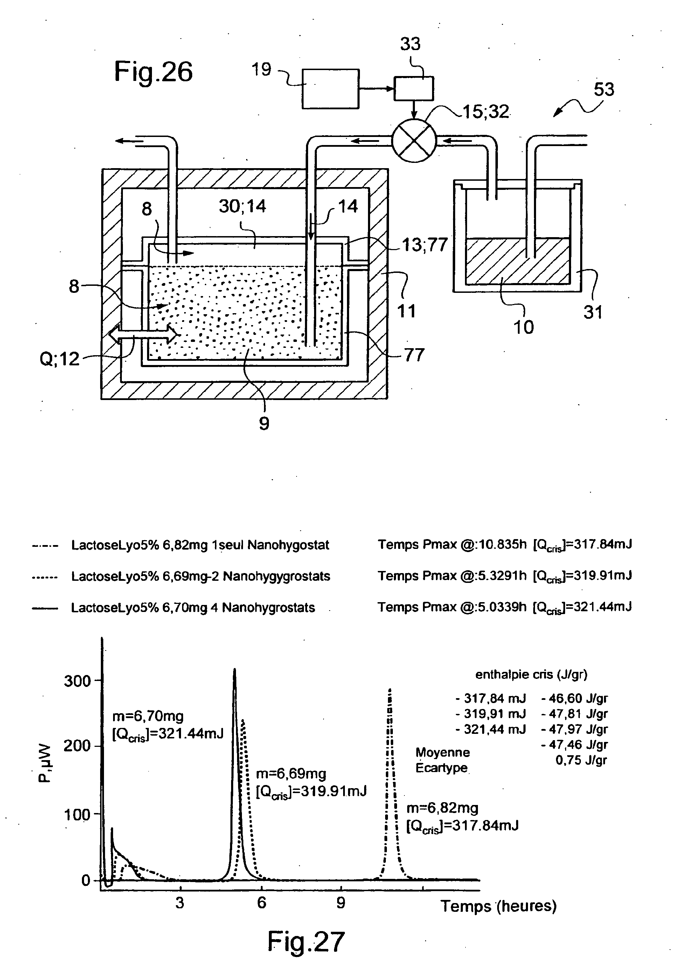

- la figure 26 illustre une troisième variante de dispositif selon l'invention en système ouvert pour un système DSC;
- les figures 27 à 32 illustrent différentes courbes d'activité thermique d'un échantillon, obtenues par un procédé selon l'invention.

En références aux figures 1 et 2, les inventeurs ont commencé par démontrer le manque de précision d'un procédé de détermination de la masse d'amorphe m d'un échantillon tel que décrit précédemment dans la partie intitulée « état de la technique antérieure ».

Pour cela, on met en oeuvre plusieurs fois de suite la mesure de la chaleur $Q_{cris}$ selon ce procédé de l'état de la technique pour différentes masses connues d'amorphes m de lactose, et on établit une droite d'étalonnage de cette chaleur $Q_{cris}$ en fonction des masses m croissantes. Dans les exemples présentés à la figure 2A, la chaleur de cristallisation $Q_{cris}$ représentée par le pic "a" est obtenue par intégration de la surface sous le pic de cristallisation "a" et elle est directement proportionnelle à la masse m de l'échantillon. Les mesures sont réalisées à 25°C. Le saturateur contrôle l'Humidité Relative à 38%. La solution saline saturée du saturateur est une solution de NaI. La droite de régression linéaire de la représentation des chaleurs de cristallisation $Q_{cris}$ en fonction de la masse m de l'échantillon amorphe est présentée sur la figure 2B.

La régression linéaire donne un très bon coefficient de corrélation $R^2=1$. L'ordonnée à l'origine utilisée pour le calcul du taux d'amorphe, devrait être nulle. Elle a cependant ici une valeur très élevée et une signification physique aberrante : pour m inférieur à 4 milligrammes, la cristallisation devient endothermique !

Selon les inventeurs de la présente demande de brevet, dans l'état de la technique antérieure, l'utilisation inappropriée d'une solution saline saturée est à l'origine de biais importants et inacceptables pour la quantification de la masse m d'amorphe, car dans ce cas l'hypothèse selon laquelle :

[la quantité de chaleur $Q_{tot}$ reçue ou cédée pendant la cristallisation de l'échantillon par le système comprenant l'échantillon et la solution saline saturée]
est égale à
[la chaleur de cristallisation $Q_{cris}$ de la partie amorphe de l'échantillon] est fausse.

On va maintenant décrire, en référence aux figures 3 et 4, un mode de réalisation préférentiel de dispositif 5 de contrôle d'une cristallisation ou d'une recristallisation selon l'invention, comprenant un premier mode de réalisation d'ampoule calorimétrique fermée 7 en verre.

Le dispositif 5 comprend un calorimètre 6. Le calorimètre 6 est un microcalorimètre de type « TA Instruments 2277 Thermal Activity Monitor ». Le microcalorimètre 6 comprend un logement pour l'ampoule 7. Le microcalorimètre 6, le logement et l'ampoule 7 forment des moyens pour recevoir un système 8. Le système 8 comprend tout le contenu de l'ampoule, notamment un échantillon de matière solide 9, une source de vapeur 10, et de la vapeur 14. L'ampoule 7 contient l'échantillon de matière solide 9 et la source de vapeur 10. L'échantillon de matière solide 9 est initialement au moins en partie amorphe et/ou au moins en partie cristalline lorsqu'il est placé dans l'ampoule, c'est-à-dire avant toute cristallisation ou recristallisation de l'échantillon 9 se déroulant au sein du dispositif 5 et avant toute mesure mis en oeuvre au moyen du dispositif 5. La source de vapeur 10 est une solution comprenant au moins un solvant de cristallisation de ladite matière solide 9, et est agencée pour diffuser de la vapeur 14 de cet au moins un solvant dans l'ampoule 7. Un solvant de cristallisation de la matière solide est un solvant qui peut déclencher une cristallisation ou une recristallisation de cette matière. Typiquement, la cristallisation ou la recristallisation est déclenchée pour une pression de vapeur de cet au moins un solvant environnant la matière solide égale ou supérieure à une pression critique Pc de cristallisation ou de recristallisation.

Le microcalorimètre 6 comprend en outre des moyens 11 de stabilisation de la température du système 8, ces moyens 11 entourant le logement et l'ampoule 7, ces moyens 11 étant agencés pour refroidir ou réchauffer le système 8 jusqu'à ce que le système atteigne une température d'équilibre, les moyens 11 étant en outre agencés pour maintenir la température du système à cette température d'équilibre ; ainsi, le microcalorimètre 6 est agencé pour que l'échantillon de matière 9 et la source de vapeur 10 forment un système 8 isotherme, maintenue à la température d'équilibre. Pour maintenir la température du système 8 à la température d'équilibre, le microcalorimètre 6 est agencé pour échanger avec le système 8 de l'énergie sous la forme de quantité de chaleur Q (référencée 12), le microcalorimètre 6 cédant ou recevant de la chaleur Q selon qu'une réaction respectivement endothermique ou exothermique se déroule au sein du système 8. Les moyens 11 comprennent typiquement un module à effet Peltier.

Les moyens 11 sont en outre agencés pour mesurer en continu la quantité de chaleur Q, 12 ou plus précisément le flux de chaleur $P = \dfrac{dQ}{dt}$ reçu(e) ou cédé(e) par le système 8.

En outre, l'ampoule 7 comprend un couvercle 13 pour enfermer le système 8 à l'intérieur de l'ampoule 7 ; ainsi, le microcalorimètre 6 est agencé pour que l'échantillon de matière 9 et la source de vapeur 10 forment un système 8 fermé, c'est-à-dire un système n'échangeant pas de matière. Le système 8 ne cède ni ne reçoit de quantité de matière.

L'ampoule 7 du microcalorimètre 6 est agencée pour que la vapeur 14 diffusée par la source 10 entre en contact avec l'échantillon 9 et déclenche ainsi une cristallisation ou une recristallisation de l'échantillon 9.

L'ampoule 7 comprend en outre des moyens 15 pour limiter une vitesse de la diffusion de vapeur 14 dans le système 8, agencés pour que la vitesse de diffusion soit inférieure à 100 nano mole par seconde, de préférence comprise entre 1 pico mole par seconde et 1 nano mole par seconde de molécules de cette vapeur.

Une limitation de la vitesse de diffusion de la vapeur 14 dans le système 8 limite, diminue, freine, ralentie ou restreint la vitesse de diffusion par rapport au cas où la source de vapeur 10 se trouverait dans une grande coupelle ou un Becher débouchant directement sur l'échantillon 9.

Les moyens 15 comprennent un capillaire 16 contenant la source de vapeur 10. Le diamètre du capillaire est typiquement compris entre 1 micromètre et 1 millimètre. L'échantillon 9 est placé sur une grille 20, de manière à être située au dessus de l'extrémité 21 du capillaire 16 par laquelle la vapeur 14 sort du capillaire et est diffusée. Ainsi, une force de capillarité retient ledit solvant dans le capillaire 16 et limite sa diffusion dans le système 8 autour de l'échantillon.

Les moyens 15 comprennent en outre un bouchon de matière 17 situé à l'extrémité 21 du capillaire 16 par laquelle la vapeur 14 est diffusée. Le bouchon 17 est une paroi poreuse qui sépare l'échantillon 9 et la partie 18 du capillaire contenant la source de vapeur 10, ladite paroi 17 étant agencée pour limiter la diffusion de vapeur 14 de la partie 18 vers l'échantillon de matière 9. Autrement dit, cette paroi 17 freine le passage de vapeur dudit solvant, du capillaire 16 vers l'échantillon de matière 9.

Les moyens 15 sont agencés pour que la cristallisation ou la recristallisation de l'échantillon 9 démarre uniquement lorsque le système 8 a atteint la température d'équilibre.

Enfin, le dispositif 5 comprend en outre des moyens de calcul 19 pour calculer et déterminer une chaleur $Q_{cris}$ de cristallisation ou de recristallisation et/ou une masse d'amorphe m et/ou un taux d'amorphe T% de l'échantillon 9, à partir d'une mesure de flux $P = \dfrac{dQ}{dt}$ effectuée par les moyens de mesure. Cette détermination est détaillée ci-dessous pour la description des modes de réalisation de procédé selon l'invention. Les moyens 19 comprennent typiquement un microprocesseur, un circuit électronique analogique ou numérique ou un ordinateur, agencé pour récupérer des mesures provenant des moyens de mesures 11 et pour calculer et en déduire Qcris, m et T%. Les moyens 19 comprennent en outre des moyens pour afficher les mesures $\dfrac{dQ}{dt}$ provenant des moyens de mesures 11, ainsi que les données Qcris obtenue des moyens 19, m et T% calculées.

Dans une variante du premier mode de réalisation d'ampoule 7 de la figure 4, le bouchon 17 est un bouchon hermétique qui, dans un état fermé, empêche la vapeur 14 de sortir du capillaire, et, dans un état ouvert, laisse la vapeur 14 sortir du capillaire et se diffuser, le dispositif 5 comprenant en outre des moyens pour commander un passage de l'état fermé vers l'état ouvert, ledit passage étant notamment commandé lorsque l'ampoule 7 est fermée et lorsque le système 8 a atteint sa température d'équilibre.

Dans une autre variante du premier mode de réalisation d'ampoule 7 de la figure 4, le bouchon 17 n'est pas présent.

On va maintenant décrire, en référence à la figure 5, un deuxième mode de réalisation d'ampoule calorimétrique en système fermé 7 et en verre pour le dispositif 5 de la figure 3.

Ce deuxième mode de réalisation d'ampoule ne sera décrit que pour ses différences par rapport au premier mode de réalisation d'ampoule de la figure 4.

Dans ce deuxième mode de réalisation d'ampoule, la source de vapeur n'est pas contenue dans un capillaire 16. Le deuxième mode de réalisation d'ampoule comprend deux parties séparées :

- une première partie 22 servant de réservoir contenant la source de vapeur 10, et

- une deuxième partie 23 comprenant l'échantillon de matière 9.

Les moyens de limitation de la vitesse de diffusion 15 comprennent une paroi poreuse 24 séparant la première 22 et la deuxième 23 partie (c'est-à-dire séparant l'échantillon 9 et la source de vapeur 10), ladite paroi 24 étant agencée pour limiter la diffusion de vapeur 14 du réservoir 22 vers l'échantillon de matière 9. Autrement dit, cette paroi 24 freine et limite le passage de vapeur dudit un solvant, du réservoir 22 vers l'échantillon de matière 9.

On va maintenant décrire, en référence à la figure 6, un troisième mode de réalisation d'ampoule calorimétrique fermée 7 en verre pour le dispositif 5 de la figure 3.

Ce troisième mode de réalisation d'ampoule ne sera décrit que pour ses différences par rapport au premier mode de réalisation d'ampoule de la figure 4.

Dans ce troisième mode de réalisation d'ampoule, la source de vapeur 10 n'est pas contenue dans un capillaire 16. Les moyens 15 de limitation de la vitesse de diffusion comprennent un support 25 non soluble dans ledit solvant et dans lequel est absorbée la source de vapeur. Le support 25 est typiquement un polymère tel que la cellulose et ses dérivés ou la laine de verre, dérivés de la silice ou tout produit capable de contenir le solvant de cristallisation et d'en limiter l'évaporation de manière mécanique (porosité, tortuosité...) ou physicochimique (diffusion). La nature du support susmentionnée est à titre d'exemple. Ainsi, des forces d'interaction entre ledit solvant et le support 25 retiennent ledit solvant dans le support et limitent sa diffusion dans le système 8 autour de l'échantillon 9. Ces forces d'interaction comprennent typiquement des forces de capillarité exercées sur ledit solvant par des microcavités du support dans lequel ledit solvant est absorbé.

Le troisième mode de réalisation d'ampoule 7 comprend deux parties séparées :

- une première partie 22 servant de réservoir contenant le support 25 et la source de vapeur 10, et

- une deuxième partie 23 comprenant l'échantillon de matière 9.

Les moyens de limitation de la vitesse de diffusion 15 comprennent en outre une paroi poreuse 24 séparant la première 22 et la deuxième 23 partie (c'est-à-dire séparant l'échantillon 9 et la source de vapeur 10), ladite paroi 24 étant agencée pour limiter la diffusion de vapeur du réservoir vers l'échantillon de matière. Autrement dit, cette paroi 24 freine le passage de vapeur dudit solvant, du réservoir 22 vers l'échantillon de matière 9.

Dans une variante de ce troisième mode de réalisation d'ampoule selon l'invention, la paroi 24 n'est pas présente.

On va maintenant décrire, en référence aux figures 7 à 20, différents modes de réalisation de procédé selon l'invention mis en oeuvre par le dispositif 5 comprenant n'importe lequel des modes de réalisation d'ampoule selon l'invention précédemment décrit.

On va tout d'abord décrire les points communs de ces différents modes de réalisations de procédé selon l'invention. Dans ces différents modes de réalisation, le procédé de contrôle d'une cristallisation ou d'une recristallisation selon l'invention comprend :

- une diffusion de vapeur 14 dudit solvant de cristallisation dans le système fermé isotherme 8, ledit système 8 comprenant l'échantillon de matière solide 9 et la source de vapeur 10 diffusant la vapeur 14, la matière solide 9 étant initialement au moins en partie amorphe et/ou au moins en partie cristalline,

- une cristallisation (c'est-à-dire un passage d'une phase amorphe à une phase cristalline) ou une recristallisation (c'est-à-dire un passage d'une phase cristalline à une autre phase cristalline) de l'échantillon 9 sous l'effet de la vapeur diffusée 14,
- au moins pendant la cristallisation ou la recristallisation, une mesure continue de chaleur reçue ou cédée par le système,

la source de vapeur 10 comprenant ledit solvant de cristallisation de ladite matière solide 9. Le système 8 étant isotherme, la cristallisation ou recristallisation et la mesure sont réalisées à température constante, c'est-à-dire à la température d'équilibre. Pendant respectivement la cristallisation ou la recristallisation les quantités de chaleurs échangées au sein du système autres que respectivement la chaleur de cristallisation ou de recristallisation de l'échantillon sont inférieures à environ 10%, notamment 5%, avantageusement 1% de respectivement la chaleur de cristallisation ou de recristallisation de l'échantillon. Bien évidemment, les quantités de chaleur échangées au sein du système 8 exclues les quantités de chaleur échangées entre le système 8 et son environnement extérieur, comme par exemple la quantité de chaleur Q échangée entre le système 8 et les moyens 11. Cette condition n'est pas réalisée par l'état de la technique antérieure.

Autrement dit, on utilise la source de vapeur 10 dans le système fermé isotherme 8 pour contrôler la cristallisation ou la recristallisation de l'échantillon de matière solide 9, initialement au moins en partie amorphe et/ou au moins en partie cristalline, contenu dans le système fermé 8, ladite source de vapeur 10 comprenant ledit solvant de cristallisation de ladite matière solide, dont la diffusion de vapeur entraine la cristallisation ou la recristallisation de l'échantillon, ladite source de vapeur 10 étant telle que les quantités de chaleurs échangées au sein du système pendant respectivement la cristallisation ou la recristallisation de l'échantillon autres que la chaleur respectivement de cristallisation ou de recristallisation de l'échantillon sont inférieures à environ 10%, notamment 5%, avantageusement 1% de la chaleur respectivement de cristallisation ou de recristallisation de l'échantillon.

Cas particulier d'une cristallisation

Considérons maintenant plus particulièrement le cas d'une cristallisation. L'échantillon de matière 9 comprend initialement un mélange amorphe et cristallin. L'échantillon possède une masse totale M amorphe et cristalline, dont une masse m d'amorphe. La masse M de l'échantillon est connue. L'échantillon de matière 9 est un solide, monobloc ou sous forme de poudre. L'échantillon de matière 9 comprend typiquement du lactose, du saccharose, du salbutamol ou un mélange de ceux-ci. L'échantillon de matière 9 est placé dans l'ampoule 7 avec la source de vapeur 10. Après avoir fermé l'ampoule 7, on place l'ampoule dans le microcalorimètre 6.

Dès que l'on place l'ampoule dans le microcalorimètre 6, on utilise les moyens 11 pour refroidir ou réchauffer la température du système 8 jusqu'à ce que le système 8 atteigne une température d'équilibre, et pour maintenir le système à cette température d'équilibre pendant les mesures à venir. Le temps pour atteindre la température d'équilibre est typiquement de 30 minutes.

De plus, dès que l'on place l'ampoule dans le microcalorimètre 6, la diffusion de vapeur 14 démarre. La pression de vapeur dudit solvant augmente dans le système 8 (c'est-à-dire dans l'ampoule), jusqu'à atteindre la pression critique de cristallisation Pc. Une fois la pression critique de cristallisation Pc atteinte, la cristallisation de l'échantillon 9 débute. Après avoir atteint la pression critique de cristallisation Pc, la pression de vapeur dudit solvant peut éventuellement continuer à augmenter. La diffusion comprend une diffusion de vapeur dudit solvant de cristallisation :

- contenu dans le capillaire 16, la diffusion passant éventuellement à travers le bouchon 17 s'il est présent, ou
- absorbé dans le support 25 non soluble dans cet au moins un solvant, ou
- contenu dans le réservoir 22 et séparé de l'échantillon 9 par la paroi poreuse 24,

selon le mode de réalisation d'ampoule 7 selon l'invention utilisée.

Le capillaire 16, le bouchon 17, le support 25 et la paroi 24 assurent une limitation de vitesse de la diffusion de vapeur 14 dans le système 8.

La limitation de la vitesse de diffusion est agencée pour que la cristallisation de l'échantillon 9 démarre uniquement lorsque le système a atteint la température d'équilibre. Autrement dit, la limitation de la vitesse de diffusion est agencée pour que le système 8 atteigne la température d'équilibre avant d'atteindre la pression critique de cristallisation Pc de ledit solvant à partir de laquelle la cristallisation de l'échantillon 9 démarre.

Après que le système a atteint la température d'équilibre et au moins pendant la cristallisation de l'échantillon 9, les moyens 11 mesurent en continu la quantité de chaleur Q reçue ou cédée par le système 8 au sein du microcalorimètre 6. Plus exactement, on mesure en continue dans le temps le flux de chaleur $P = \dfrac{dQ}{dt}$ échangé par le système 8, ce flux de chaleur étant égal à la dérivée de Q en fonction du temps t. Ce flux de chaleur représente l'activité thermique du système 8. Le suivi et l'enregistrement de P en fonction du temps fourni des informations thermodynamiques et cinétiques de la cristallisation de l'échantillon 9. Sur la courbe représentant P en fonction du temps, on observe un pic 26 de l'activité thermique P qui dure pendant un intervalle de temps 27.

Ensuite, les moyens 19 calculent et déterminent la chaleur de cristallisation $Q_{cris}$ de l'échantillon 9. Du fait que les quantités de chaleurs échangées au sein du système pendant la cristallisation de l'échantillon autres que la chaleur de cristallisation de l'échantillon sont inférieures à environ 10%, notamment 5%, avantageusement 1% de la chaleur de cristallisation de l'échantillon, le mode de calcul suivant devient réaliste : on calcul $Q_{cris}$ en considérant qu'elle est égale

à $Q_{tot}$ l'intégrale de l'activité thermique $P = \dfrac{dQ}{dt}$ sur l'intervalle de temps 27 du pic 26.

Ensuite, les moyens 19 calculent et déterminent la masse d'amorphe m de l'échantillon selon la formule suivante :

$$m = \frac{Qcris}{\Delta Hcris}$$

Où $\Delta H_{cris}$ est l'enthalpie de cristallisation de la matière amorphe de l'échantillon 9. La matière de l'échantillon 9 étant connue, $\Delta H_{cris}$ est mesurée préalablement sur une masse connue d'amorphe de la matière à analysé (cette masse d'amorphe connue est préparée par lyophilisation) connue car $\Delta H_{cris}$ dépend de la matière composant l'échantillon 9.

Ainsi, les moyens 19 calculent et déterminent le taux T% d'amorphe de l'échantillon 9 selon la formule suivante :

$$T\% = \frac{m}{M}$$

*avec* 0< T% <1

Premier mode de réalisation de procédé selon l'invention.

Selon un premier mode de réalisation du procédé selon l'invention, ledit solvant dans la source de vapeur 10 ne comprend aucun soluté dissout. En particulier, ledit solvant dans la source de vapeur ne comprend aucun sel dissout. La source de vapeur comprend ledit solvant, mais ne comprend pas de soluté dissout dans ledit solvant. Ceci est un mode de réalisation préférentiel pour que les quantités de chaleurs échangées au sein du système 8 pendant la (re)cristallisation de l'échantillon autres que la chaleur de (re)cristallisation de l'échantillon sont inférieures à environ 10%, notamment 5%, avantageusement 1% de la chaleur de (re)cristallisation de l'échantillon.

Dans une première variante du premier mode de réalisation du procédé selon l'invention, la source de vapeur est un unique solvant pur, de préférence sélectionné parmi de l'eau pure ou un solvant organique tel que du méthanol ou de l'éthanol. Par solvant pur, on entend un solvant dans lequel aucun soluté n'est dissout.

Dans une deuxième variante du premier mode de réalisation du procédé selon l'invention, la source de vapeur est un mélange de solvants de préférence sélectionnés parmi de l'eau pure ou un solvant organique tel que du méthanol ou de l'éthanol, en particulier le mélange «méthanol-éthanol » ou « eau-éthanol » ou encore « eau-méthanol ». La source de vapeur 10, c'est-à-dire le mélange de solvants, ne comprend aucun soluté dissout.

La figure 7 représente la courbe d'activité thermique $P = \dfrac{dQ}{dt}$ obtenue par le dispositif 5 avec le premier mode de réalisation d'ampoule 7 de la figure 4, pour une température d'équilibre de 25°C, l'échantillon 9 étant du lactose, la source de vapeur 10 étant une solution de méthanol pur. Les moyens 19 calculent :

m =   15,09 mg.

La figure 8 représente la courbe d'activité thermique $P = \dfrac{dQ}{dt}$ obtenue par le dispositif 5 avec le premier mode de réalisation d'ampoule 7 de la figure 4, pour une température d'équilibre de 25°C, l'échantillon 9 étant du lactose lyophilisé, la source de vapeur 10 étant de l'eau pure. Les moyens 19 calculent :

$$m = 3{,}64 \text{ mg.}$$

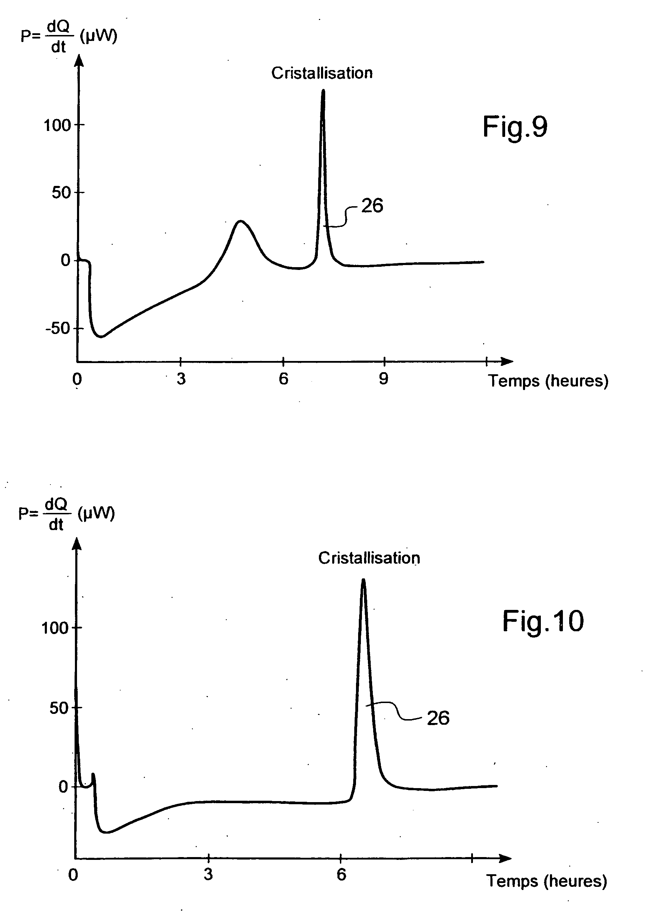

La figure 9 représente la courbe d'activité thermique $P = \dfrac{dQ}{dt}$ obtenue par le dispositif 5 avec le premier mode de réalisation d'ampoule 7 de la figure 4, pour une température d'équilibre de 25°C, l'échantillon 9 étant du lactose lyophilisé, la source de vapeur 10 étant un mélange de méthanol et d'éthanol selon un ratio 50%-50%. Les moyens 19 calculent :

$$m = 4{,}35 \text{ mg.}$$

La figure 10 représente la courbe d'activité thermique $P = \dfrac{dQ}{dt}$ obtenue par le dispositif 5 avec le premier mode de réalisation d'ampoule 7 de la figure 4, pour une température d'équilibre de 25°C, l'échantillon 9 étant du lactose lyophilisé, la source de vapeur 10 étant un mélange d'eau et d'éthanol selon un ratio 70%eau-30% éthanol. Les moyens 19 calculent :

$$m = 4{,}49 \text{ mg.}$$

La figure 11 représente la courbe d'activité thermique $P = \dfrac{dQ}{dt}$ obtenue par le dispositif 5 avec le premier mode de réalisation d'ampoule 7 de la figure 4, pour une température d'équilibre de 25°C, l'échantillon 9 étant un mélange de lactose lyophilisé et de saccharose lyophilisé, la source de vapeur 10 étant une solution de méthanol pur. On sait que le saccharose cristallise avant le lactose. Les moyens 19 réitèrent les calculs de $Q_{cris}$ et m pour chacun des pics 28, 29 correspondants à la cristallisation respectivement du saccharose et du lactose. Les moyens 19 calculent une masse de saccharose amorphe m(saccharose) = 11,66 mg. Les moyens 19 calculent une masse de lactose amorphe m(lactose) = 5,50 mg.

Pour chacun des cas des figures 7 à 9, les moyens 19 calculent le taux T% d'amorphe de lactose (et éventuellement de saccharose) selon la formule :

$$T\% = \frac{m}{M}$$

où M est la masse totale de l'échantillon 9.

Deuxième mode de réalisation de procédé selon l'invention.

Selon un deuxième mode de réalisation du procédé selon l'invention, la source de vapeur comprend un soluté dissout dans ledit solvant de cristallisation.

Dans une première variante du deuxième mode de réalisation du procédé selon l'invention, ledit soluté est en quantité inférieure à la quantité nécessaire à la saturation du soluté dans ledit un solvant. Nous pouvons citer ci-dessous comme exemple non exhaustif des mélanges soluté-solvant: saccharose-méthanol, saccharose-éthanol, lactose-méthanol, lactose-éthanol, méthanol glycérol, permettant de fixer l'activité du solvant de cristallisation à la valeur de la pression de vapeur de cristallisation de l'amorphe. La figure 16 montre des exemples avec des mélanges méthanol-glycérol à différents ratios. Le glycérol est ici un soluté et non un solvant, car sa pression de vapeur est trop faible pour cristalliser l'amorphe.

La figure 12 illustre la première variante du deuxième mode de réalisation du procédé selon l'invention. La figure 12 représente la courbe d'activité thermique $P = \dfrac{dQ}{dt}$ obtenue par le dispositif 5 avec le premier mode de réalisation d'ampoule 7 de la figure 4, pour une température d'équilibre de 25°C, l'échantillon 9 étant du saccharose lyophilisé, la source de vapeur 10 étant une solution de méthanol dans laquelle est dissout du glycérol dans une proportion 0.7g de méthanol pour 0.9 g de glycérol. Les moyens 19 calculent :

$$m = \quad 11{,}52 \text{ mg.}$$

Dans une deuxième variante du deuxième mode de réalisation du procédé selon l'invention, le soluté est à saturation dans ledit solvant, mais le soluté dissout dans ledit solvant a un temps de latence de cristallisation supérieur à un temps de latence respectivement de cristallisation ou de recristallisation de l'échantillon de sorte que le soluté ne cristallise dans la source de vapeur qu'après la fin respectivement de la cristallisation ou de la recristallisation de l'échantillon 9.

La figure 13 illustre la deuxième variante du deuxième mode de réalisation du procédé selon l'invention. La figure 13 représente la courbe d'activité thermique $P = \dfrac{dQ}{dt}$ par le dispositif 5 avec le premier mode de réalisation d'ampoule 7 de la figure 4, pour une température d'équilibre de 25°C, l'échantillon 9 étant du saccharose lyophilisé, la source de vapeur 10 étant une solution méthanolique saturée en saccharose à 4°C et filtrée. Les moyens 19 calculent :

$$m = \quad 23{,}18 \text{ mg.}$$

La figure 14 illustre la deuxième variante du deuxième mode de réalisation du procédé selon l'invention. La figure 14 représente la courbe d'activité thermique $P = \dfrac{dQ}{dt}$ par le dispositif 5 avec le premier mode de réalisation d'ampoule 7 de la figure 4, pour une température d'équilibre de 25°C, l'échantillon 9 étant du lactose amorphe, la source de vapeur 10 étant une solution méthanolique saturée en lactose à 4°C. Les moyens 19 calculent :

$$m = 32{,}96 \text{ mg}$$

La figure 15 illustre également la deuxième variante du deuxième mode de réalisation du procédé selon l'invention. La figure 15 représente la courbe d'activité thermique $P = \dfrac{dQ}{dt}$ par le dispositif 5 avec le premier mode de réalisation d'ampoule 7 de la figure 4, pour une température d'équilibre de 25°C, l'échantillon 9 étant du saccharose amorphe, la source de vapeur 10 étant une solution méthanolique saturée en lactose à 4°C.

$$m = 15{,}35 \text{ mg}$$

En effet, si la source de vapeur 10 devient sursaturée en soluté suite à l'évaporation dudit solvant mais qu'elle est cinétiquement stable, c'est-à-dire qu'elle ne cristallise pas rapidement, la cristallisation du soluté interviendra après la cristallisation ou la recristallisation de l'échantillon et ne perturbera pas la mesure de l'activité thermique $P = \dfrac{dQ}{dt}$ .

Dans une troisième variante du deuxième mode de réalisation du procédé selon l'inventions, le soluté ne présente pas de chaleur de solvatation dans ledit solvant, c'est-à-dire qu'il ne présente pas de chaleur d'hydratation et pas de chaleur de dissolution dans ledit solvant. Ce mode de réalisation peut être également combiné avec la première ou la deuxième variante du deuxième mode de réalisation.

Remarques concernant les moyens 15 pour limiter la vitesse de diffusion de la vapeur 14

Par rapport à une utilisation d'une solution saline saturée selon l'état de la technique antérieure, l'utilisation selon l'invention d'un solvant pur ou d'un mélange de solvant sans soluté dissout imposera une pression partielle saturante dans l'ampoule 7, ce qui accélérera de manière importante la phase d'hydratation de la partie amorphe de l'échantillon 9 et risque d'entrainer une cristallisation ou une recristallisation trop rapide de l'échantillon 9 qui pourra avoir lieu lors du sertissage de l'échantillon ou encore lors de son équilibre thermique (30min) avant la mesure. Ce risque est important pour des amorphes à haute vitesse d'hydratation comme le salbutamol. Plutôt que de raccourcir le temps d'équilibre thermique de l'échantillon 9 à cinq minutes au lieu de la demi-heure requise (ce qui introduirait d'autres artefacts de mesure liés à la différence de température entre l'échantillon 9 non équilibré et le bain du microcalorimètre), les moyens 15 permettent d'assurer que la cristallisation ou la recristallisation de l'échantillon 9 ne démarre qu'après la stabilisation de l'échantillon à la température d'équilibre.

Les moyens 15 permettent de contrôler la diffusion de la vapeur 14 dudit solvant de cristallisation, afin d'assurer une augmentation lente et maîtrisée de la pression de vapeur au sein de l'ampoule 7 et d'atteindre la pression de vapeur critique de cristallisation ou de recristallisation Pc de l'échantillon 9 dans un délai raisonnable.

Lorsque l'on utilise une source de vapeur 10 comprenant un soluté saturé ou non saturé, l'adoption des moyens 15 est particulièrement importante non seulement pour contrôler la diffusion de la vapeur 14 dudit solvant de cristallisation, mais également pour permettre au soluté dissout dans ledit solvant d'avoir un temps de latence de cristallisation supérieur à un temps de latence de cristallisation ou de recristallisation de l'échantillon de sorte que le soluté ne cristallise qu'après la fin de la cristallisation ou de la recristallisation de l'échantillon.

Démonstration de la précision du procédé selon l'invention.

Pour vérifier la précision du procédé selon l'invention, on réalise des courbes d'étalonnages de $Q_{cris}$ en fonction de m dans le cas ou l'échantillon 9 est du lactose 100 % amorphe (m=M) et dans le cas ou l'échantillon 9 est du saccharose 100 % amorphe (m=M).

La masse m de chacun des échantillons est donc connue.

La source de vapeur 10 est une solution de méthanol pur.

Le lactose et le saccharose amorphes sont obtenus par lyophilisation d'une solution aqueuse à 10%. Les lyophilisats sont placés dans un dessiccateur sous 0% d'humidité relative (HR) et sous vide. Des échantillons 9 sont prélevés puis pesés sous 0% d'humidité relative et mis à cristalliser à 25°C au sein du microcalorimètre 6 du dispositif 5 avec le premier mode de réalisation d'ampoule 7 de la figure 4.

Les échantillons sont placés dans des ampoules 7 calorimétriques en verre de 4ml. La pression de vapeur du méthanol est contrôlée par le capillaire 16 (de diamètre légèrement inférieur à 1mm). L'échantillon 9 est pesé directement dans l'ampoule. Dès l'ajout du de la source 10 dans le capillaire 16, l'échantillon 9 est introduit dans le microcalorimètre 6 (TA Instruments 2277 Thermal Activity Monitor). Il reste en position d'équilibre pendant 30 min pour atteindre sa température d'équilibre (25°C) puis il est abaissé en position de mesure et les traces thermiques $P = \dfrac{dQ}{dt}$ sont enregistrées.

Des exemples de l'activité thermique $P = \dfrac{dQ}{dt}$ du lactose et du saccharose sont respectivement présentés sur la figure 17 et 18. Dans le tableau 1 ci-dessous figure :

- l'identification de l'échantillon (S1 à S4, ou L1 à L6),
- la nature de la matière composant l'échantillon (lactose ou saccharose),
- la masse m de chacun des échantillons, et

- la chaleur de cristallisation $Q_{cris}$ de chacun des échantillons, obtenue après intégration de $P = \dfrac{dQ}{dt}$ sous le pic de cristallisation de chacun des échantillons comme expliqué précédemment.

La cristallisation du lactose et du saccharose amorphes est clairement observée sur les traces thermiques enregistrées.

Les temps d'induction de la cristallisation sont suffisamment élevés (environs 6 h pour le lactose et 30 min pour le saccharose) et permettent de visualiser la cristallisation dans les temps de mesure.

**Tableau 1**

| Echantillon | Nature | masse m (mg) avec m=M | Chaleur de cristallisation $Q_{cris}$ (mJ) |
|---|---|---|---|
| L1 | Lactose | 5,13 | 128,3 |
| L 2 | Lactose | 7,50 | 181,1 |
| L3 | Lactose | 7,81 | 193,0 |
| L4 | Lactose | 11,5 | 292,8 |
| L5 | Lactose | 15,09 | 369,8 |
| L6 | Lactose | 27,22 | 690,9 |
| S 1 | Saccharose | 19,81 | 633,7 |
| S 2 | Saccharose | 25,64 | 829,2 |
| S 3 | Saccharose | 30,41 | 1008,4 |
| S 4 | Saccharose | 34,78 | 1150,4 |

Les pics de cristallisation obtenus sont étroits, parfaitement intégrables et ne présentent pas d'épaulement. Les droites d'étalonnage représentent les chaleurs de cristallisation du lactose et du saccharose amorphes en fonction de la quantité d'amorphe ainsi que leurs régressions linéaires, sont illustrées sur la figure respectivement 19 et 20.

L'enthalpie de cristallisation $\Delta H_{cris}$ du lactose sous atmosphère de méthanol est de -25,1±0,5 J/g et de -32,8 ±0,6 J/g pour le saccharose.

La régression linéaire de la courbe sous la forme $Q_{cris}$=a.m+b donne une valeur de l'ordonnée à l'origine de -3,96 pour le lactose (contre -174,08 pour le lactose cristallisé avec des solutions salines saturées, voir figure 2) et elle est de -7,72 pour le saccharose. Elles sont faibles et l'on peut mesurer une masse d'amorphe par cette méthode allant jusqu'à 0,25 mg.

Dans des variantes des modes de réalisation de procédé selon l'invention précédemment décrits, l'échantillon de matière 9 peut comprendre un cristal initialement polymorphe ou pseudo-polymorphe, et au lieu d'une cristallisation de l'échantillon 9 (c'est-à-dire un passage de tout ou partie de l'échantillon d'un phase amorphe à une phase cristalline), on a une recristallisation de l'échantillon comprenant un passage d'une phase cristalline à une autre phase cristalline d'une partie ou de la totalité de l'échantillon, le procédé selon l'invention comprenant alors une détermination, par les moyens 19, et selon le même mode de calcul que celui précédemment décrit :

- d'une quantité de chaleur de recristallisation $Q_{cris}$ par intégration de l'activité thermique $P = \dfrac{dQ}{dt}$ sur un intervalle de temps correspondant à la durée d'un pic 26 de recristallisation,
- de la masse m d'une des phases cristalline et d'un taux T% de cette phase cristalline par rapport à la masse totale M de l'échantillon, $\Delta H_{cris}$ correspondant à une enthalpie de recristallisation.

Ainsi, l'échantillon peut être initialement un cristal pur.

Dans d'autres variantes des modes de réalisation de procédé selon l'invention précédemment décrits, l'échantillon peut être initialement (i.e. avant le démarrage de la cristallisation) un amorphe pur. Dans ce cas, le procédé selon l'invention peut être réitéré avec de nombreuses conditions expérimentales différentes (température d'équilibre, nature dudit solvant), de manière à optimiser la cristallisation de l'échantillon de matière considéré, en fonction des mesures

de $P = \dfrac{dQ}{dt}$ et des chaleurs $Q_{cris}$ calculées. Bien évidemment, la masse m n'est pas calculée dans ce cas.

On va maintenant décrire, en référence à la figure 21, un quatrième mode de réalisation d'ampoule calorimétrique 7 fermée en verre pour le dispositif de la figure 3, pour mettre en oeuvre une variante de l'un quelconque des modes de réalisation de procédé selon l'invention précédemment décrits. Ce quatrième mode de réalisation d'ampoule calorimétrique ne sera décrit uniquement que pour ses différences par rapport à l'ampoule de la figure 4.

Dans cette variante, on utilise un échantillon 9 qui est sous forme de poudre. Le capillaire 16 est placé dans l'ampoule 7 de sorte que son extrémité 21 affleure juste au dessus de l'échantillon 9 et débouche dans le volume intérieur libre 30 de l'ampoule non occupé par l'échantillon 9. Dans tout ce document, on appelle par volume intérieur libre 30 (ou volume mort) tout le volume situé à l'intérieur de l'ampoule 7 dans lequel la vapeur 14 et seulement la vapeur 14 peut se loger. Sur la figure 21, ce volume libre 30 est égal au volume total intérieur de l'ampoule 7 moins le volume de la poudre 9 et moins le volume du capillaire 16.

Le couvercle 13 est un piston agencé pour s'enfoncer pour ajuster le volume total intérieur de l'ampoule 7. Ce piston 13 est enfoncé de sorte que le volume 30 libre intérieur de l'ampoule, aussi appelé volume mort, est inférieur à 5% du volume de l'échantillon 9. Cette condition est particulièrement importante pour le système fermé et permet, dans la mise en oeuvre d'un procédé selon l'invention, de réduire considérablement les échanges entre les molécules (par exemple d'eau) de la phase vapeur 14 et les molécules (par exemple d'eau) expulsées par l'échantillon 9 pendant la cristallisation.

On va maintenant décrire, en référence à la figure 22, une première variante de dispositif 51 selon l'invention en système ouvert pour mettre en oeuvre une variante de l'un quelconque des modes de réalisation de procédé selon l'invention précédemment décrits. La figure 22 n'illustre pas tout le dispositif 51, mais uniquement ces différences par rapport au dispositif de la figure 3. Cette première variante de dispositif 51 selon l'invention en système ouvert ne sera décrite uniquement que pour ses différences par rapport au dispositif de la figure 3.

Dans cette variante, la source de vapeur 10 est située à l'extérieur du système 8, dans un conteneur 31.

Dans cette variante, le couvercle 13 est percé de sorte que le système 8 ne soit pas enfermé à l'intérieur de l'ampoule ; ainsi, le calorimètre 6 est agencé pour que l'échantillon de matière 9 forme un système 8 ouvert, c'est-à-dire un système échangeant de la matière. Le système 8 cède et reçoit de la quantité de matière avec l'extérieur de l'ampoule.

Les moyens 15 ne comprennent pas de bouchon 17 mais comprennent une pompe 32 située à l'extérieur du calorimètre, reliant le conteneur 31 au système 8, et agencée pour contrôler et maitriser la vitesse de diffusion de vapeur 14. La pompe est agencée pour injecter un gaz vecteur (tel que de l'air ou de l'azote) saturé en la vapeur 14 de l'au moins un solvant de cristallisation. La pompe est agencée pour que la vitesse de diffusion de la vapeur 14 soit inférieure à 100 nano mole par seconde, de préférence comprise entre 1 pico mole par seconde et 1 nano mole par seconde des molécules de cette vapeur.

Le dispositif 51 comprend en outre des moyens 33 de commande de la pompe agencés pour ajuster la vitesse de diffusion de la vapeur 14 en fonction de la réponse de l'échantillon 9 (c'est-à-dire de la quantité de chaleur mesurée) lors de la phase d'hydratation. Plus particulièrement, les moyens de commande de la pompe sont agencés pour commencer la phase d'hydratation avec une vitesse de diffusion élevée, puis pour réduire au cours du temps la vitesse de diffusion pour ne pas provoquer la cristallisation durant la phase d'hydratation. Ainsi, on réduit le temps d'analyse en accélérant la phase d'hydratation tout en empêchant la cristallisation durant la phase d'hydratation.

En outre, le couvercle 13 est un piston agencé pour s'enfoncer pour ajuster le volume intérieur de l'ampoule 7. Ce piston 13 est enfoncé de sorte que le volume 30 libre intérieur de l'ampoule, aussi appelé volume mort, est inférieur à 5% du volume de l'échantillon 9. Ainsi, on réduit considérablement les échanges entre les molécules (par exemple d'eau) de la phase vapeur 14 et les molécules expulsées par l'échantillon 9 pendant la cristallisation.

Finalement, la pompe est agencée pour injecter la vapeur 14 directement à l'intérieur de l'échantillon 9 sous forme de poudre, ce qui permet d'améliorer la cristallisation de l'échantillon.

On va maintenant décrire, en référence aux figures 23 et 24, un premier mode de réalisation de cupule DSC fermée pour une deuxième variante 52 de dispositif selon l'invention mettant en oeuvre une variante de l'un quelconque des modes de réalisation de procédé selon l'invention précédemment décrits. Cette deuxième variante de dispositif 52 selon l'invention en système ouvert ne sera décrite uniquement que pour ses différences par rapport au dispositif de la figure 3. La figure 23 n'illustre pas tout le dispositif 52, mais uniquement ces différences par rapport au dispositif de la figure 3.

A la place de l'ampoule calorimétrique fermée 7 en verre, le dispositif 52 comprend une cupule 77 d'appareil DSC.

Dans le dispositif 52, le calorimètre 6 n'est pas un microcalorimètre mais est un appareil de calorimétrie à balayage différentiel (ou DSC pour « Differential Scanning Calorimetry ») qui comprend un logement pour la cupule DSC 77, mais qui est utilisé en mode de mesure isotherme.

On n'utilise que les capteurs de l'appareil de calorimétrie à balayage différentiel (DSC), pas sa fonction de balayage en température. Ainsi, on détourne la DSC de son utilisation première, ou on ajoute une fonction supplémentaire à cet appareillage : on mesure les phénomènes de cristallisation induite par balayage de vapeur à basse vitesse contrôlée, cet à dire par balayage en pression. On travaille donc en isotherme. Ainsi :

1) on utilise une cupule échantillon d'une DSC quelconque, car son volume est réduit par rapport à celui d'une cellule calorimétrique (100 μl contre 3 ml, au minimum pour la calorimétrie).
2) on utilise la régulation thermique du four de cette même DSC pour maintenir notre échantillon à température constance (25°C en l'occurrence).
3) on utilise les capteurs des cette même DSC pour mesurer les flux de chaleur, car ils donnent des résultats aussi bon que les capteurs de la microcalorimétrie (en terme de Joules mesurés par masse de l'échantillon).
4) on utilise le système d'enregistrement et de visualisation des données de cette même DSC, puisque si tous les logiciels des DSC commerciales permettent une représentation de la puissance thermique en fonction de la température, ils permettent également la représentation de cette même puissance thermique en fonction du temps comme la calorimétrie isotherme. On n'utilise donc pas la fonction balayage en température.

5) On ajoute le contrôle de l'humidité et de la vitesse de diffusion de vapeur (comme on va le voir par la suite, soit en cupule fermée contenant de préférence un échantillon avec capillaire en spirale jouant le rôle de la source de vapeur dite nanohygrostat, soit en cupule ouverte avec de préférence la source de vapeur à l'extérieur du système équipée d'une pompe pour assurer un débit à vitesse contrôlé et basse de la vapeur dans l'échantillon).

5) on utilise le logiciel de cette même DSC pour obtenir la surface sous la courbe de cristallisation et pour imprimer les résultats.

On utilise donc une DSC en tant qu'appareillage (sauf sa fonction balayage en température) et on lui ajoute la fonction balayage en pressions de vapeur à basse vitesse contrôlée en cupule fermée ou ouverte, ici dans le but de mesurer une cristallisation induite par la vapeur.

Bien entendu, selon l'invention, cette fonction nouvelle ajoutée à la DSC en tant qu'appareillage peut également être utilisée dans d'autres domaines que la cristallisation, chaque fois où un contrôle de la vitesse (et/ou de sa variation) d'introduction de molécules à l'état vapeur induit au niveau de l'échantillon une réaction physique, chimique ou biologique mesurable par le suivi du flux de chaleur qu'elle génère.

Le calorimètre 6, le logement et la cupule 77 forment des moyens pour recevoir le système 8. Le système 8 comprend tout le contenu de la cupule 77, notamment l'échantillon de matière solide 9 qui est sous forme de poudre, la source de vapeur 10, et la vapeur 14 comme précédemment décrit. La cupule 77 contient l'échantillon de matière solide 9 et la source de vapeur 10. L'échantillon de matière solide 9 est initialement au moins en partie amorphe et/ou au moins en partie cristalline lorsqu'il est placé dans la cupule, c'est-à-dire avant toute cristallisation ou recristallisation de l'échantillon 9 se déroulant au sein du dispositif 52 et avant toute mesure mis en oeuvre au moyen du dispositif 52. La source de vapeur 10 est une solution comprenant au moins un solvant de cristallisation de ladite matière solide 9, et est agencée pour diffuser de la vapeur 14 de cet au moins un solvant dans la cupule. Un solvant de cristallisation de la matière solide est un solvant qui peut déclencher une cristallisation ou une recristallisation de cette matière. Typiquement, la cristallisation ou la recristallisation est déclenchée pour une pression de vapeur de cet au moins un solvant environnant la matière solide égale ou supérieure à une pression critique Pc de cristallisation ou de recristallisation.

Le calorimètre 6 comprend en outre les moyens 11 de stabilisation de la température du système 8 décrits précédemment, ces moyens 11 entourant le logement et la cupule, ces moyens 11 étant agencés pour refroidir ou réchauffer le système 8 jusqu'à ce que le système atteigne une température d'équilibre, les moyens 11 étant en outre agencés pour maintenir la température du système à cette température d'équilibre ; ainsi, le calorimètre 6 est agencé pour que l'échantillon de matière 9 et la source de vapeur 10 forment un système 8 isotherme, maintenue à la température d'équilibre. Pour maintenir la température du système 8 à la température d'équilibre, le calorimètre 6 est agencé pour échanger avec le système 8 de l'énergie sous la forme de quantité de chaleur Q (référencée 12), le calorimètre 6 cédant ou recevant de la chaleur Q selon qu'une réaction respectivement endothermique ou exothermique se déroule au sein du système 8. Les moyens 11 comprennent typiquement un module à effet Peltier.

Les moyens 11 sont en outre agencés pour mesurer en continu la quantité de chaleur Q, 12 ou plus précisément le flux de chaleur $P = \dfrac{dQ}{dt}$ reçu(e) ou cédé(e) par le système 8.

En outre, la cupule 77 comprend un couvercle 13 pour enfermer le système 8 à l'intérieur de la cupule ; ainsi, le calorimètre 6 est agencé pour que l'échantillon de matière 9 et la source de vapeur 10 forment un système 8 fermé, c'est-à-dire un système n'échangeant pas de matière. Le système 8 ne cède ni ne reçoit de quantité de matière.

La cupule du calorimètre 6 est agencée pour que la vapeur 14 diffusée par la source 10 entre en contact avec l'échantillon 9 et déclenche ainsi une cristallisation ou une recristallisation de l'échantillon 9.

La cupule comprend en outre des moyens 15 pour limiter une vitesse de la diffusion de vapeur 14 dans le système 8.

Une limitation de la vitesse de diffusion de la vapeur 14 dans le système 8 limite, diminue, freine, ralentie ou restreint la vitesse de diffusion par rapport au cas où la source de vapeur 10 se trouverait dans une grande coupelle ou un Becher débouchant directement sur l'échantillon 9.

Les moyens 15 comprennent un capillaire 16 contenant la source de vapeur 10. L'échantillon 9 est sous forme de poudre. Comme illustré sur la vue de dessus de la figure 24, le capillaire 16 a une forme de spirale. Comme illustré sur la vue de coupe de profil de la figure 23, le capillaire 16 est placé inséré dans le tête 13 de la cupule, de sorte qu'en refermant la tête 13 de la cupule 77 sur le corps de la cupule, l'extrémité 21 du capillaire s'enfonce dans l'échantillon et diffuse au coeur de l'échantillon les vapeurs de solvant, c'est-à-dire directement à l'intérieur de l'échantillon sous forme de poudre. Une force de capillarité retient ledit solvant dans le capillaire 16 et limite sa diffusion dans le système 8 autour de l'échantillon.

Les moyens 15 comprennent en outre un bouchon de matière 17 situé à l'extrémité 21 du capillaire 16 par laquelle la vapeur 14 est diffusée. Le bouchon 17 est une paroi poreuse qui sépare l'échantillon 9 et la partie 18 du capillaire contenant la source de vapeur 10, ladite paroi 17 étant agencée pour limiter la diffusion de vapeur 14 de la partie 18 vers l'échantillon de matière 9. Autrement dit, cette paroi 17 freine le passage de vapeur dudit solvant, du capillaire 16 vers l'échantillon de matière 9.

Les moyens 15 sont agencés pour que la cristallisation ou la recristallisation de l'échantillon 9 démarre uniquement lorsque le système 8 a atteint la température d'équilibre.

Enfin, le dispositif 5 comprend en outre les moyens de calcul 19 précédemment décrit pour calculer et déterminer une chaleur $Q_{cris}$ de cristallisation ou de recristallisation et/ou une masse d'amorphe m et/ou un taux d'amorphe T% de l'échantillon 9, à partir d'une mesure de flux $P = \dfrac{dQ}{dt}$ effectuée par les moyens de mesure.

La figure 25 illustre un deuxième mode de réalisation de cupule DSC fermée pour la deuxième variante de dispositif selon l'invention, qui ne sera décrite que pour ses différences par rapport à la cupule de la figure 23. Dans ce mode de réalisation, la capillaire n'est pas inséré dans le couvercle mais émerge du couvercle.

On va maintenant décrire, en référence à la figure 26, une troisième variante de dispositif 53 selon l'invention en système ouvert pour mettre en oeuvre une variante de l'un quelconque des modes de réalisation de procédé selon l'invention précédemment décrits. Cette troisième variante de dispositif 53 selon l'invention en système ouvert ne sera décrite uniquement que pour ses différences par rapport au dispositif de la figure 23. La figure 26 n'illustre pas tout le dispositif 53, mais uniquement ces différences par rapport au dispositif de la figure 23.

Dans cette variante, la source de vapeur 10 est située à l'extérieur du système 8, dans un conteneur 31.

Dans cette variante, le couvercle 13 est percé de sorte que le système 8 ne soit pas enfermé à l'intérieur de la cupule 77 ; ainsi, le calorimètre 6 est agencé pour que l'échantillon de matière 9 appartienne à un système 8 ouvert, c'est-à-dire un système échangeant de la matière. Le système 8 cède et reçoit de la quantité de matière avec l'extérieur de la cupule 77.

Les moyens 15 ne comprennent pas de bouchon 17 mais comprennent une pompe 32 située à l'extérieur du calorimètre, reliant le conteneur 31 au système 8, et agencée pour contrôler et maitriser la vitesse de diffusion de vapeur 14. La pompe est agencée pour injecter un gaz vecteur (tel que de l'air ou de l'azote) saturé en la vapeur 14 de l'au moins un solvant de cristallisation. La pompe est agencée pour que la vitesse de diffusion de la vapeur 14 soit inférieure à 100 nano mole par seconde, de préférence comprise entre 1 pico mole par seconde et 1 nano mole par seconde des molécules de cette vapeur.

Le dispositif 53 comprend en outre des moyens 33 de commande de la pompe agencés pour ajuster la vitesse de diffusion de la vapeur 14 en fonction de la réponse de l'échantillon 9 (c'est-à-dire de la quantité de chaleur mesurée) lors de la phase d'hydratation. Plus particulièrement, les moyens de commande de la pompe sont agencés pour commencer la phase d'hydratation avec une vitesse de diffusion élevée, puis pour réduire au cours du temps la vitesse de diffusion pour ne pas provoquer la cristallisation durant la phase d'hydratation. Ainsi, on réduit le temps d'analyse en accélérant la phase d'hydratation tout en empêchant la cristallisation durant la phase d'hydratation.

En outre, la cupule 77 et l'échantillon sont agencées pour que le volume 30 libre à l'intérieur de la cupule 77, aussi appelé volume mort, est inférieur à 5% du volume de l'échantillon 9. Ainsi, on réduit considérablement les échanges entre les molécules (par exemple d'eau) de la phase vapeur 14 et les molécules expulsées par l'échantillon 9 pendant la cristallisation.

Finalement, la pompe est agencée pour injecter la vapeur 14 directement à l'intérieur de l'échantillon 9 sous forme de poudre, ce qui permet d'améliorer la cristallisation de l'échantillon.

La figure 27 est une courbe d'activité thermique d'un échantillon de 6,82 mg, 6,69 mg ou 6,70 mg de lactose lyophilisé, obtenue par le dispositif selon l'invention illustré sur la figure 3. Le solvant de cristallisation est uniquement de l'eau pure. Il s'agit de cristallisations à 25°C, dans une ampoule 7 de microcalorimètre, en système fermé, avec un volume mort inférieur à 5% du volume de l'échantillon. Toutes les cristallisations sont parties de zéro et revenues à zéro à quelques dizaines de nanowatts près (effet du nombre de nano-hygrostats 10μL).

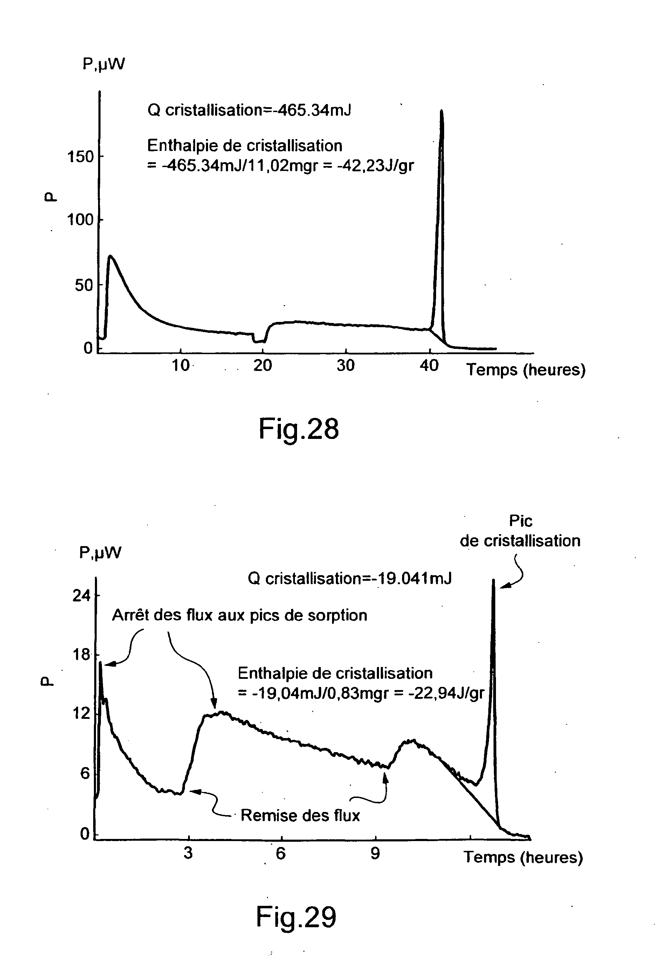

Les figures 28 et 29 sont des courbes d'activité thermique d'un échantillon de lactose amorphe dans une ampoule 7 de microcalorimètre avec un volume mort inférieur à 5% du volume de l'échantillon, sous 100% de pression partielle de vapeur de solvants de cristallisation en système ouvert, obtenues par le dispositif selon l'invention illustré sur la figure 22.

Dans le cas de la figure 28, le solvant de cristallisation est de l'eau pure. Sur la figure 28, on observe la cristallisation, à la vapeur d'eau, de 11,02 mg de lactose amorphe (obtenu par Lyophilisation d'une solution de 5% de lactose) en système ouvert (microcalorimétrie sous flux d'air à 100% d'humidité relative, 25°C). L'échantillon a été maintenu à 40% d'humidité relative (en dessous de son humidité de cristallisation) pendant 20 heures, puis l'humidité relative est passée à 100% avec un flux de 20 nano moles d'eau /sec.

Dans le cas de la figure 29, le solvant de cristallisation est du méthanol pur. Sur la figure 29, on observe la cristallisation, à la vapeur de méthanol, de 0,83 mg de lactose amorphe (obtenu par Lyophilisation d'une solution de 5% de lactose) en système ouvert sous flux d'air à 100% de pression de vapeur relative de méthanol, et 25°C. L'échantillon a été maintenu sous un flux de 20 nano moles de vapeur de méthanol/sec. Lorsque le pic de sorption est atteint, les flux sont arrêtés et la poudre est laissée à s'équilibrer en consommant les vapeurs de méthanol présentes dans l'ampoule, puis lorsque la sorption devient faible, les flux sont remis après stabilisation de la sorption.

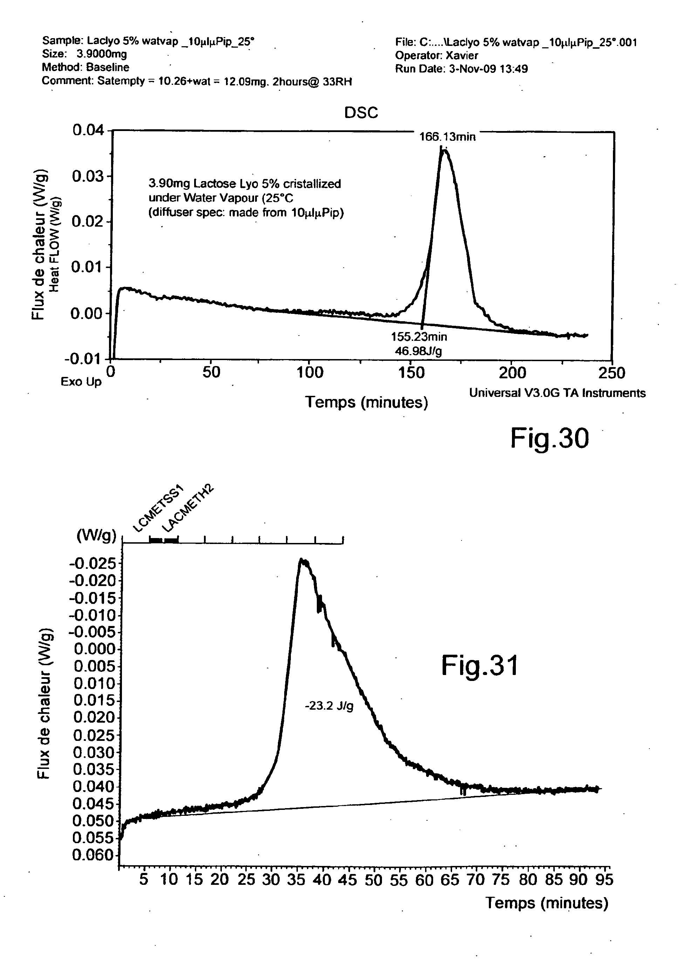

Les figures 30, 31 et 32 sont des courbes d'activité thermique d'un échantillon de lactose amorphe dans une cupule d'appareil DSC avec un volume mort inférieur à 5% du volume de l'échantillon, en système fermé, obtenues par le dispositif selon l'invention illustré sur la figure 23.

Sur la figure 30, on observe la cristallisation en DSC d'un échantillon de 3,9 mg de lactose amorphe cristallisé sous vapeur d'eau dans une DSC TA Instrument. L'enthalpie de cristallisation est équivalente à celle trouvée par microcalorimétrie (Capillaire contenant $1\mu L$ de solvant de cristallisation mis dans la cupule DSC utilisé ici en isotherme à 25°C).

Sur la figure 31, on observe un thermogramme DSC (Metler) de cristallisation de 4,82 mg de lactose Lyophilisé amorphe sous vapeur de méthanol à 25°C. L'Enthalpie de cristallisation de -23,2J/g est très proche de la valeur trouvée par microcalorimétrie pour le méthanol.

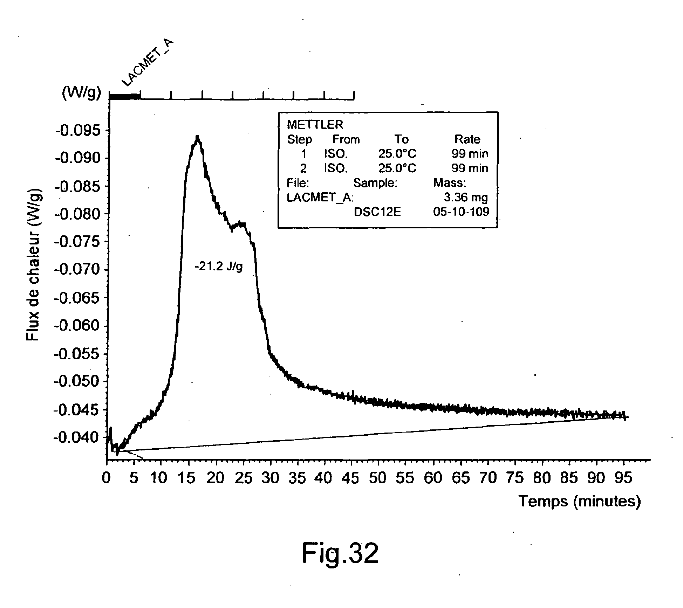

Sur la figure 32, on observe un thermogramme DSC (Metler) de cristallisation de 3,36 mg de lactose Lyophilisé amorphe sous vapeur de méthanol à 25°C. L'enthalpie de cristallisation de -21,2 J/g est proche de la valeur trouvée par microcalorimétrie pour le méthanol.

On remarque, notamment en référence à la figure 29, qu'un avantage de l'invention est que l'on peut mesurer un taux d'amorphe de manière très précise même en faible quantité, typiquement de l'ordre du milligramme par exemple, en détectant la chaleur de cristallisation que l'on sépare nettement des autres phénomènes annexes telle que l'hydratation, la dissolution, etc...

## Revendications

1. Procédé de contrôle d'une cristallisation ou d'une recristallisation comprenant :

   - une diffusion de vapeur (14) d'au moins un solvant de cristallisation dans un système isotherme (8), ledit système comprenant un échantillon de matière solide (9) et une source de vapeur (10) diffusant la vapeur (14), la matière solide étant initialement au moins en partie amorphe et/ou au moins en partie cristalline,
   - une cristallisation ou une recristallisation de l'échantillon (9) sous l'effet de la vapeur diffusée (14), la source de vapeur (10) comprenant ledit solvant de cristallisation de ladite matière solide, procédé dans lequel pendant la cristallisation ou la recristallisation les quantités de chaleurs échangées au sein du système autres que la chaleur de cristallisation ou de recristallisation de l'échantillon sont inférieures à environ 10%, notamment 5%, avantageusement 1% de la chaleur de cristallisation ou de recristallisation de l'échantillon, **caractérisé en ce qu'**il comprend en outre une limitation d'une vitesse de la diffusion de vapeur (14) dans le système en freinant le passage de vapeur de solvant vers l'échantillon de matière (9).

2. Procédé selon la revendication 1, dans lequel au moins pendant la cristallisation ou la recristallisation, une mesure de chaleur reçue ou cédée par le système (8),

3. Procédé selon l'une des revendications 1 ou 2, dans lequel l'échantillon est compris dans une cellule telle que par exemple une ampoule de microcalorimètre ou une cupule DSC, et dont le volume intérieur est ajusté au volume de l'échantillon de sorte que le volume mort de la cellule soit inférieur à 5% du volume de l'échantillon.

4. Procédé selon l'une des revendications 1 à 3, dans lequel on injecte la vapeur (14) directement à l'intérieur de l'échantillon (9) qui est sous forme de poudre.

5. Procédé selon l'une quelconque des revendications 1 à 4, dans lequel la source de vapeur (10) comprend un soluté dissout dans ledit solvant de cristallisation, ledit soluté étant en quantité inférieure à la quantité nécessaire à la saturation du soluté dans ledit solvant.

6. Procédé selon l'une quelconque des revendications 1 à 5, dans lequel la source de vapeur (10) comprend un soluté dissout dans ledit solvant de cristallisation, ledit soluté étant à saturation dans ledit solvant, le soluté dissout dans ledit solvant ayant un temps de latence de cristallisation supérieur à un temps de latence de cristallisation ou de recristallisation de l'échantillon de sorte que le soluté ne cristallise qu'après la fin de la cristallisation ou de la recristallisation de l'échantillon.

7. Procédé selon l'une quelconque des revendications 1 à 6, dans lequel la source de vapeur (10) comprend un soluté dissout dans ledit solvant de cristallisation, ledit soluté ne présentant pas de chaleur de solvatation dans ledit solvant.

8. Procédé selon l'une quelconque des revendications 1 à 4, dans lequel ledit solvant dans la source de vapeur (10) ne comprend aucun soluté dissout.

9. Procédé selon l'une quelconque des revendications 1 à 4 ou 8, dans lequel ledit solvant dans la source de vapeur (10) ne comprend aucun sel dissout.

10. Procédé selon l'une quelconque des revendications 1 à 4 ou 8 ou 9, dans lequel la source de vapeur (10) est un unique solvant pur, de préférence sélectionné parmi de l'eau pure ou un solvant organique tel que du méthanol ou de l'éthanol.

11. Procédé selon l'une quelconque des revendications 1 à 4 ou 8 ou 9, dans lequel la source de vapeur (10) est un mélange de solvants de préférence sélectionnés parmi de l'eau pure ou un solvant organique tel que du méthanol ou de l'éthanol, en particulier le mélange «méthanol-éthanol » ou « eau-éthanol » ou encore « eau-méthanol ».

12. Procédé selon l'une quelconque des revendications 1 à 11, dans lequel l'échantillon de matière (9) comprend un cristal initialement polymorphe ou pseudo-polymorphe, la recristallisation comprenant un passage d'une phase cristalline à une autre phase cristalline d'une partie ou de la totalité de l'échantillon.

13. Procédé selon l'une quelconque des revendications 1 à 11, dans lequel l'échantillon de matière (9) comprend initialement un mélange amorphe et cristallin.

14. Procédé selon la revendication 13, comprenant en outre une détermination du taux d'amorphe de l'échantillon (9).

15. Procédé selon l'une quelconque des revendications 2 à 14, dans lequel la mesure de chaleur comprend une mesure de flux de chaleur échangé avec le système ou une mesure de l'activité thermique du système.

16. Procédé selon l'une des revendications précédentes, dans lequel on limite la vitesse de diffusion de vapeur (14) de sorte que la vitesse de diffusion de vapeur (14) soit inférieure à 100 nano mole par seconde.

17. Procédé selon l'une des revendications 1 à 16, dans lequel la diffusion de vapeur comprend une diffusion de vapeur (14) dudit solvant de cristallisation contenu dans un capillaire (16).

18. Procédé selon l'une des revendications 1 à 16, dans lequel la diffusion de vapeur comprend une diffusion de vapeur (14) dudit solvant de cristallisation absorbé dans un support (25) non soluble dans cet au moins un solvant.

19. Procédé selon l'une quelconque des revendications 1 à 18, dans lequel la diffusion de vapeur comprend une diffusion de vapeur (14) dudit solvant de cristallisation contenu dans un réservoir (16, 22) séparé de l'échantillon (9) par une paroi poreuse (17, 24) limitant la diffusion de vapeur (14) du réservoir (16, 22) vers l'échantillon de matière (9).

20. Procédé selon l'une quelconque des revendications 1 à 19, comprenant avant la mesure une stabilisation de la température du système jusqu'à ce que le système (8) atteigne une température d'équilibre, le système restant à cette température d'équilibre pendant la mesure, la limitation de la vitesse de diffusion étant agencée pour que la cristallisation ou la recristallisation démarre uniquement lorsque le système a atteint la température d'équilibre.

21. Dispositif de contrôle d'une cristallisation ou d'une recristallisation pour mettre en oeuvre un procédé selon l'une quelconque des revendications 1 à 20, comprenant :

- des moyens (6, 7) pour recevoir un échantillon de matière solide (9) initialement au moins en partie amorphe et/ou au moins en partie cristalline et pour recevoir une source de vapeur (10) comprenant au moins un solvant de cristallisation de ladite matière solide, les moyens de réception (6, 7) étant agencés pour que l'échantillon de matière et la source de vapeur forment un système isotherme (8), les moyens de réception (6, 7) de l'échantillon étant en outre agencé pour que de la vapeur (14) diffusée par la source (10) déclenche une cristallisation ou une recristallisation de l'échantillon (9), **caractérisé en ce que** le dispositif comprend en outre des moyens (15) pour limiter une vitesse de la diffusion de vapeur (14) dans le système (8).

22. Dispositif de contrôle d'une cristallisation ou d'une recristallisation selon la revendication 21 comprenant en outre des moyens (11) pour mesurer une chaleur reçue ou cédée par le système isotherme (8).

23. Dispositif selon l'une des revendications 21 ou 22, dans lequel les moyens de limitation sont agencés pour que la vitesse de diffusion de vapeur (14) soit inférieure à 100 nano mole par seconde.

24. Dispositif selon l'une des revendications 21 à 23, comprenant une cellule telle que par exemple une ampoule de microcalorimètre ou une cupule DSC, cette cellule étant agencée pour recevoir l'échantillon et pour que son volume intérieur soit ajustable au volume de l'échantillon de sorte que le volume mort de la cellule soit inférieur à 5% du volume de l'échantillon.

25. Dispositif selon l'une quelconque des revendications 21 à 23, comprenant en outre des moyens pour injecter la vapeur (14) directement à l'intérieur de l'échantillon (9) qui est sous forme de poudre.

26. Dispositif selon l'une quelconque des revendications 21 à 24, dans lequel les moyens (15) de limitation de la vitesse de diffusion comprennent un capillaire (16) prévu pour contenir la source de vapeur (10).

27. Dispositif selon l'une quelconque des revendications 21 à 24, dans lequel les moyens (15) de limitation de la vitesse de diffusion comprennent un support (25) non soluble dans ledit solvant et prévu pour absorber la source de vapeur (10).

28. Dispositif selon l'une quelconque des revendications 21 à 27, dans lequel les moyens (15) de limitation de la vitesse de diffusion comprennent une paroi poreuse (17, 24) séparant l'échantillon (9) et un réservoir (16, 22) prévu pour contenir la source de vapeur (10), ladite paroi (17, 24) étant agencée pour limiter la diffusion de vapeur du réservoir (16, 22) vers l'échantillon de matière (9).

29. Dispositif selon l'une quelconque des revendications 21 à 28, dans lequel les moyens de réception comprennent des moyens (11) pour stabiliser une température du système jusqu'à ce que le système atteigne une température d'équilibre, les moyens (15) de limitation de la vitesse de diffusion étant agencés pour que la cristallisation ou la recristallisation de l'échantillon démarre uniquement lorsque le système a atteint la température d'équilibre.

30. Dispositif selon l'une quelconque des revendications 21 à 29, comprenant en outre des moyens (19) pour déterminer un taux d'amorphe de l'échantillon, à partir d'une mesure effectuée par les moyens de mesure (11).

**Claims**

1. Method for controlling crystallization or recrystallization comprising:

   - a vapour diffusion (14) of at least one crystallization solvent in an isothermal system (8), said system comprising a sample of solid material (9) and a vapour source (10) diffusing the vapour (14), the solid material being initially at least partially amorphous and/or at least partially crystalline,
   - a crystallization or a recrystallization of the sample (9) under the effect of the diffused vapour (14),
   - the vapour source (10) comprising said solvent for crystallizing said solid material, a method in which during the crystallization or recrystallization the quantities of heat exchanged within the system other than the heat of crystallization or recrystallization of the sample are less than approximately 10%, in particular 5%, advantageously 1% of the heat of crystallization or recrystallization of the sample, **characterized in that** it also comprises a limitation of the vapour diffusion rate (14) in the system in restraining the passage of vapour of solvent towards the sample of material (9).

2. Method according to claim 1, in which at least during the crystallization or recrystallization, a measurement of heat received or given up by the system (8).

3. Method according to claim 1 or 2, in which the sample is comprised in a cell such as for example a microcalorimetric ampoule or a DSC pan, and the internal volume of which is adjusted to the volume of the sample so that the dead volume of the cell is less than 5% of the volume of the sample.

4. Method according to claim 1 to 3, in which the vapour (14) is injected directly inside the sample (9) which is in powder form.

5. Method according to any one of claims 1 to 4, in which the vapour source (10) comprises a solute dissolved in said crystallization solvent, said solute being in a quantity less than the quantity necessary for the saturation of the solute in said solvent.

6. Method according to any one of claims 1 to 5, in which the vapour source (10) comprises a solute dissolved in said crystallization solvent, said solute being at saturation in said solvent, the solute dissolved in said solvent having a crystallization latency time greater than a crystallization or recrystallization latency time of the sample so that the solute crystallizes only after the end of crystallization or recrystallization of the sample.

7. Method according to any one of claims 1 to 6, in which the vapour source (10) comprises a solute dissolved in said crystallization solvent, said solute exhibiting no heat of solvation in said solvent.

8. Method according to any one of claims 1 to 4, in which said solvent in the vapour source (10) comprises no dissolved solute.

9. Method according to any one of claims 1 to 4 or 8, in which said solvent in the vapour source (10) comprises no dissolved salt.

10. Method according to any one of claims 1 to 4 or 8 or 9, in which the vapour source (10) is a single pure solvent, preferably selected from pure water or an organic solvent such as methanol or ethanol.

11. Method according to any one of claims 1 to 4 or 8 or 9, in which the vapour source (10) is a mixture of solvents preferably selected from pure water or an organic solvent such as methanol or ethanol, in particular the "methanol-ethanol" or "water-ethanol" or also "water-methanol" mixture.

12. Method according to any one of claims 1 to 11, in which the sample of material (9) comprises an initially polymorphic or pseudo-polymorphic crystal, the recrystallization comprising passage from one crystalline phase to another crystalline phase of part or all of the sample.

13. Method according to any one of claims 1 to 11, in which the sample of material (9) initially comprises an amorphous and crystalline mixture.

14. Method according to claim 13, also comprising determination of the amorphous content of the sample (9).

15. Method according to any one of claims 2 to 14, in which the heat measurement comprises a measurement of the heat flow exchanged with the system or a measurement of the thermal activity of the system.

16. Method according to any one of previous claims, in which the vapour diffusion rate (14) is limited so that the vapour diffusion rate (14) is less than 100 nano mole per second.

17. Method according to claim 1 to 16, in which the vapour diffusion comprises a vapour diffusion (14) of said crystallization solvent contained in a capillary (16).

18. Method according to claim 1 to 16, in which the vapour diffusion comprises a vapour diffusion (14) of said crystallization solvent absorbed in a support (25) which is not soluble in this at least one solvent.

19. Method according to any one of claims 1 to 18, in which the vapour diffusion comprises a vapour diffusion (14) of said crystallization solvent contained in a reservoir (16, 22) separated from sample (9) by a porous wall (17, 24) limiting the vapour diffusion (14) of the reservoir (16, 22) towards the sample of material (9).

20. Method according to any one of claims 1 to 19, comprising before the measurement a stabilization of the temperature of the system until the system (8) reaches an equilibrium temperature, the system remaining at this equilibrium temperature during the measurement, the limitation of the diffusion rate being arranged so that the crystallization or recrystallization commences only when the system has reached the equilibrium temperature.

21. Device for controlling crystallization or recrystallization for implementing a method according to any one of claims 1 to 20, comprising:

- means (6, 7) for receiving a sample of solid material (9) which is initially at least partially amorphous and/or at least partially crystalline and for receiving a vapour source (10) comprising at least one solvent for crystallizing said solid material, the reception means (6, 7) being arranged so that the sample of material and the vapour source form an isothermal system (8), the reception means (6, 7) being moreover arranged so that vapour (14) diffused by the source (10) initiates crystallization or recrystallization of the sample (9), and **characterized in that** the device also comprises means (15) for limiting a vapour diffusion rate (14) in the system (8).

22. Device for controlling crystallization or recrystallization according the claim 21 also comprising means (11) for measuring heat received or given up by the isothermal system (8).

23. Device according to claim 21 or 22, in which the means of limitation are arranged so that the vapour diffusion rate (14) is less than 100 nano mole per second.

24. Device according to claim 21 to 23, comprising a cell such as for example a microcalorimetric ampoule or a DSC pan, this cell being arranged for receiving the sample and so that its internal volume can be adjusted to the volume of the sample so that the dead volume of the cell is less than 5% of the volume of the sample.

25. Device according to any one of claims 21 to 23, also comprising means for injecting the vapour (14) directly inside the sample (9) which is in powder form.

26. Device according to any one of claims 21 to 24, in which the means (15) of limiting the diffusion rate include a capillary (16) provided to contain the vapour source (10).

27. Device according to any one of claims 21 to 24, in which the means (15) of limiting the diffusion rate include a support (25) which is not soluble in said solvent and provided for absorbing the vapour source (10).

28. Device according to any one of claims 21 to 27, in which the means (15) of limiting the diffusion rate include a porous wall (17, 24) separating the sample (9) and a reservoir (16, 22) provided for containing the vapour source (10), said wall (17, 24) being arranged in order to limit the vapour diffusion from the reservoir (16, 22) towards the sample of material (9).

29. Device according to any one of claims 21 to 28, in which the reception means include means (11) for stabilizing a temperature of the system until the system reaches an equilibrium temperature, the means (15) of limiting the diffusion rate being arranged so that the crystallization or recrystallization of the sample commences only when the system has reached the equilibrium temperature.

30. Device according to any one of claims 21 to 29, also comprising means (19) for determining an amorphous content of the sample, from a measurement carried out by the measurement means (11).

**Patentansprüche**

1. Verfahren zur Überwachung einer Kristallisierung oder einer Rekristallisierung, umfassend:

- eine Dampfdiffusion (14) mindestens eines Kristallisierungslösungsmittels in einem isothermen System (8), wobei das System eine Feststoffprobe (9) und eine Dampfquelle (10), die den Dampf (14) diffundiert, umfasst, wobei der Feststoff anfangs mindestens teilweise amorph und/oder mindestens teilweise kristallin ist,
- eine Kristallisierung oder eine Rekristallisierung der Probe (9) unter Einwirkung des diffundierten Dampfs (14), wobei die Dampfquelle (10) das Kristallisierungslösungsmittel für den Feststoff umfasst, ein Verfahren bei dem die während der Kristallisierung oder der Rekristallisierung innerhalb des Systems ausgetauschten Wärmemengen, bei denen es sich nicht um die Kristallisierungs- oder Rekristallisierungswärme der Probe handelt, kleiner als etwa 10 %, insbesondere kleiner als 5 %, vorteilhafterweise kleiner als 1 % der Kristallisierungs- oder Rekristallisierungswärme der Probe sind, **dadurch**

EP 2 356 434 B1

**gekennzeichnet, dass** es ferner eine Begrenzung einer Geschwindigkeit der Dampfdiffusion (14) in dem System umfasst, indem der Übergang des Lösungsmitteldampfs in die Stoffprobe (9) gebremst wird.

2. Verfahren nach Anspruch 1, wobei mindestens während der Kristallisierung oder der Rekristallisierung eine Messung der von dem System (8) aufgenommenen oder abgegebenen Wärme durchgeführt wird.

3. Verfahren nach einem der Ansprüche 1 oder 2, wobei die Probe in einer Zelle, wie zum Beispiel einer Mikrokaloriemeterampulle oder einem DSC-Becher, enthalten ist und deren Innenvolumen an das Volumen der Probe angepasst ist, so dass das Totvolumen der Zelle kleiner als 5 % des Probenvolumens ist.

4. Verfahren nach einem der Ansprüche 1 bis 3, wobei Dampf (14) direkt ins Innere der Probe (9), die die Form von Pulver aufweist, injiziert wird.

5. Verfahren nach irgendeinem der Ansprüche 1 bis 4, wobei die Dampfquelle (10) eine gelöste Substanz umfasst, das in dem Kristallisierungslösungsmittel gelöst ist, wobei das Gelöste in einer kleineren Menge als der Menge vorhanden ist, die für die Sättigung des Gelösten in dem Lösungsmittel erforderlich ist.

6. Verfahren nach irgendeinem der Ansprüche 1 bis 5, wobei die Dampfquelle (10) eine gelöste Substanz umfasst, das in dem Kristallisierungslösungsmittel gelöst ist, wobei das Gelöste in dem Lösungsmittel gesättigt ist, wobei das Gelöste, das in dem Lösungsmittel gelöst ist, eine Kristallisierungslatenzzeit aufweist, die größer als eine Kristallisierungs- oder Rekristallisierungslatenzzeit der Probe ist, so dass das Gelöste erst nach dem Ende der Kristallisierung oder der Rekristallisierung der Probe kristallisiert.

7. Verfahren nach irgendeinem der Ansprüche 1 bis 6, wobei die Dampfquelle (10) eine gelöste Substanz umfasst, das in dem Kristallisierungslösungsmittel gelöst ist, wobei das Gelöste in dem Lösungsmittel keine Solvatationswärme aufweist.

8. Verfahren nach irgendeinem der Ansprüche 1 bis 4, wobei das Lösungsmittel in der Dampfquelle (10) kein gelöstes Gelöstes umfasst.

9. Verfahren nach irgendeinem der Ansprüche 1 bis 4 oder 8, wobei das Lösungsmittel in der Dampfquelle (10) kein gelöstes Salz umfasst.

10. Verfahren nach irgendeinem der Ansprüche 1 bis 4 oder 8 oder 9, wobei die Dampfquelle (10) ein einziges reines Lösungsmittel ist, bevorzugt ausgewählt aus reinem Wasser oder einem organischen Lösungsmittel, wie etwa Methanol oder Ethanol.

11. Verfahren nach irgendeinem der Ansprüche 1 bis 4 oder 8 oder 9, wobei die Dampfquelle (10) ein Gemisch aus Lösungsmitteln ist, bevorzugt ausgewählt aus reinem Wasser oder einem organischen Lösungsmittel, wie etwa Methanol oder Ethanol, insbesondere dem Gemisch "Methanol-Ethanol" oder "Wasser-Ethanol" oder auch "Wasser-Methanol".

12. Verfahren nach irgendeinem der Ansprüche 1 bis 11, wobei die Stoffprobe (9) einen anfangs polymorphen oder pseudopolymorphen Kristall umfasst, wobei die Rekristallisierung einen Übergang einer kristallinen Phase in eine andere kristalline Phase eines Teils der oder der gesamten Probe umfasst.

13. Verfahren nach irgendeinem der Ansprüche 1 bis 11, wobei die Stoffprobe (9) anfangs ein amorphes und kristallines Gemisch umfasst.

14. Verfahren nach Anspruch 13, das ferner eine Bestimmung des Amorphanteils der Probe (9) umfasst.

15. Verfahren nach irgendeinem der Ansprüche 2 bis 14, wobei das Messen der Wärme ein Messen des Wärmeflusses, der mit dem System ausgetauscht wird, oder ein Messen der thermischen Aktivität des Systems umfasst.

16. Verfahren nach einem der vorhergehenden Ansprüche, wobei die Dampfdiffusionsgeschwindigkeit (14) derart begrenzt wird, dass die Dampfdiffusionsgeschwindigkeit (14) kleiner als 100 Nanomol pro Sekunde ist.

17. Verfahren nach einem der Ansprüche 1 bis 16, wobei die Dampfdiffusion eine Dampfdiffusion (14) des Kristallisierungslösungsmittels, das in einer Kapillare (16) enthalten ist, umfasst.

18. Verfahren nach einem der Ansprüche 1 bis 16, wobei die Dampfdiffusion eine Dampfdiffusion (14) des Kristallisierungslösungsmittels, das in einem in diesem mindestens einen Lösungsmittel nicht löslichen Träger (25) absorbiert ist, umfasst.

19. Verfahren nach irgendeinem der Ansprüche 1 bis 18, wobei die Dampfdiffusion eine Dampfdiffusion (14) des Kristallisierungslösungsmittels umfasst, das in einem Tank (16, 22) enthalten ist, der von der Probe (9) durch eine poröse Wand (17, 24) getrennt ist, die die Dampfdiffusion (14) von dem Tank (16, 22) zur Stoffprobe (9) begrenzt.

20. Verfahren nach irgendeinem der Ansprüche 1 bis 19, das vor dem Messen eine Stabilisierung der Temperatur des Systems umfasst, bis das System (8) eine Gleichgewichtstemperatur erreicht, wobei das System während der Messung auf dieser Gleichgewichtstemperatur bleibt, wobei die Begrenzung der Diffusionsgeschwindigkeit derart gestaltet ist, dass die Kristallisierung oder die Rekristallisierung nur beginnt, wenn das System die Gleichgewichtstemperatur erreicht hat.

21. Vorrichtung zur Überwachung einer Kristallisierung oder einer Rekristallisierung zur Durchführung eines Verfahrens nach irgendeinem der Ansprüche 1 bis 20, umfassend:

- Mittel (6, 7), um eine Feststoffprobe (9) aufzunehmen, die anfangs mindestens teilweise amorph und/oder mindestens teilweise kristallin ist, und um eine Dampfquelle (10) aufzunehmen, die mindestens ein Kristallisierungslösungsmittel für den Feststoff umfasst, wobei die Aufnahmemittel (6, 7) derart gestaltet sind, dass die Stoffprobe und die Dampfquelle ein isothermes System (8) bilden, wobei die Aufnahmemittel (6, 7) ferner derart gestaltet sind, dass der Dampf (14), der von der Quelle (10) diffundiert wird, eine Kristallisierung oder eine Rekristallisierung der Probe (9) in Gang setzt, **dadurch gekennzeichnet, dass** die Vorrichtung ferner Mittel (15) umfasst, um eine Dampfdiffusionsgeschwindigkeit (14) in dem System (8) zu begrenzen.

22. Vorrichtung zur Überwachung einer Kristallisierung oder einer Rekristallisierung nach Anspruch 21, die ferner Mittel (11) zum Messen einer Wärme umfasst, die von dem isothermen System (8) aufgenommen oder abgegeben wird.

23. Vorrichtung nach einem der Ansprüche 21 oder 22, wobei die Begrenzungsmittel derart gestaltet sind, dass die Dampfdiffusionsgeschwindigkeit (14) kleiner als 100 Nanomol pro Sekunde ist.

24. Vorrichtung nach einem der Ansprüche 21 oder 23, die eine Zelle, wie zum Beispiel eine Mikrokaloriemeterampulle oder ein DSC-Becher umfasst, wobei diese Zelle derart gestaltet ist, dass sie die Probe aufnehmen kann und dass ihr Innenvolumen an das Volumen der Probe angepasst werden kann, so dass das Totvolumen der Zelle kleiner als 5 % des Probenvolumens ist.

25. Vorrichtung nach einem der Ansprüche 21 bis 32, die ferner Mittel umfasst, um den Dampf (14) direkt ins Innere der Probe (9), die die Form von Pulver aufweist, zu injizieren.

26. Vorrichtung nach irgendeinem der Ansprüche 21 bis 24, wobei die Mittel (15) zur Begrenzung der Diffusionsgeschwindigkeit eine Kapillare (16) umfassen, die vorgesehen ist, um die Dampfquelle (10) zu enthalten.

27. Vorrichtung nach irgendeinem der Ansprüche 21 bis 24, wobei die Mittel (15) zur Begrenzung der Diffusionsgeschwindigkeit einen Träger (25) umfassen, der in dem Lösungsmittel nicht löslich ist und vorgesehen ist, um die Dampfquelle (10) zu absorbieren.

28. Vorrichtung nach irgendeinem der Ansprüche 21 bis 27, wobei die Mittel (15) zur Begrenzung der Diffusionsgeschwindigkeit eine poröse Wand (17, 24) umfassen, die die Probe (9) und einen Tank (16, 22) trennen, der vorgesehen ist, um die Dampfquelle (10) zu enthalten, wobei die Wand (17, 24) gestaltet ist, um die Dampfdiffusion des Tanks (16, 22) zur Stoffprobe (9) zu begrenzen.

29. Vorrichtung nach irgendeinem der Ansprüche 21 bis 28, wobei die Aufnahmemittel Mittel (11) zur Stabilisierung einer Temperatur des Systems bis zum Erreichen einer Gleichgewichtstemperatur des Systems, Mittel (15) zur Begrenzung der Diffusionsgeschwindigkeit, die derart gestaltet sind, dass die Kristallisierung oder die Rekristallisierung der Probe nur beginnt, wenn das System die Gleichgewichtstemperatur erreicht hat, umfassen.

**30.** Vorrichtung nach irgendeinem der Ansprüche 21 bis 29, die ferner Mittel (19) zum Bestimmen eines Amorphanteils der Probe aus einer Messung, die durch Messungsmittel (11) durchgeführt wird, umfasst.

# Fig.1

Art antérieur

# Fig.2A

pic c

pic b

pic a

1mW

2heures

# Fig.2B

$$Q(mJ)=42,94m-174,08$$

$R^3\text{-}1$

Fig.3

$\frac{dQ}{dt}$

Qchis=600mJ
m=20mg
T%=43%

Fig.4

29

Fig.5

Fig.6

## Fig.7

$$P = \frac{dQ}{dt}$$

## Fig.8

$$P = \frac{dQ}{dt} \ (\mu W)$$

Fig.9

$P= \dfrac{dQ}{dt}$ (µW)

Cristallisation

26

Temps (heures)

Fig.10

$P= \dfrac{dQ}{dt}$ (µW)

Cristallisation

26

Temps (heures)

Fig.11

Fig.12

Fig.13

Fig.14

P, µW

$$P = \frac{dQ}{dt}$$

Fig.15

26

Temps (heures)

P, mW

$$P = \frac{dQ}{dt}$$

Fig.16

26a

26d

26b

26c

Temps (min)

Fig.17

Fig.18

Lactose

$Q_{cris}(mJ)=25,134^*m$ (mg)

$R^2=0,9993$

Masse d'amorphe (mg)
m

Fig.19

Saccharose

$Q_{cris}(mJ)=32,815^*m$ (mg)

$R^2=0,9992$

Masse d'amorphe (mg)
m

Fig.20

Fig.21

Fig.22

Fig.23

Fig.24

Fig.25

## Fig.26

---

---- LactoseLyo5% 6,82mg 1seul Nanohygostat       Temps Pmax @:10.835h  [$Q_{cris}$]=317.84mJ

······ LactoseLyo5% 6,69mg-2 Nanohygygrostats       Temps Pmax @:5.3291h  [$Q_{cris}$]=319.91mJ

—— LactoseLyo5% 6,70mg 4 Nanohygrostats       Temps Pmax @:5.0339h  [$Q_{cris}$]=321.44mJ

## Fig.27

P,µW

Q cristallisation=-465.34mJ

Enthalpie de cristallisation
= -465.34mJ/11,02mgr = -42,23J/gr

150

P

100

50

0

10    20    30    40    Temps (heures)

## Fig.28

Pic
de cristallisation

P,µW

Q cristallisation=-19.041mJ

24

Arrêt des flux aux pics de sorption

18

P

Enthalpie de cristallisation
= -19,04mJ/0,83mgr = -22,94J/gr

12

6

Remise des flux

0

3    6    9    Temps (heures)

## Fig.29

Sample: Laclyo 5% watvap _10µlµPip_25°
Size: 3.9000mg
Method: Baseline
Comment: Satempty = 10.26+wat = 12.09mg. 2hours@ 33RH

File: C:....\Laclyo 5% watvap _10µlµPip_25°.001
Operator: Xavier
Run Date: 3-Nov-09 13:49

DSC

3.90mg Lactose Lyo 5% cristallized
under Water Vapour (25°C
(diffuser spec: made from 10µlµPip)

166.13min

155.23min
46.98J/g

Exo Up

Temps (minutes)

Universal V3.0G TA Instruments

## Fig.30

-23.2 J/g

## Fig.31

Temps (minutes)

Fig.32

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SHAH BIRJU et al.** Analytical techniques for quantification of amorphous/crystalline phase in pharmaceutical solids. *International Journal of Pharmaceutics,* Août 2006, vol. 95 (8), 1641-1665
- Evaluation of heat conduction microcalorimetry in pharmaceuticals stability studies. V. A new approach for continuous measurements in abundant water vapour. **M. ANGBERG et al.** International Journal of Pharmaceutics. Elsevier BV, Mars 1992, vol. 81, 153-167

- The use of isothermal microcalorimetry in the study of small degrees of amorphous content of a hydrophobic powder. **HUMÉRA AHMED et al.** International Journal of pharmaceutics. Elsevier BV, Janvier 1996, vol. 130, 195-201
- **KHALEF NAWEL ; BAKRI AZIZ.** Etude comparative de cristallisation par calorimétrie isotherme en système ouvert et en système fermé et détermination de faibles taux d'amorphe. *Récents Progrès en Génie des Procédés,* Mai 2008, ISBN 2-910239-71-3